# EUROPEAN PATENT SPECIFICATION

(11) **EP 4 266 861 B1**
(45) Date of publication and mention of the grant of the patent: **02.09.2026**
(21) Application number: 21844918.9
(22) Date of filing: 23.12.2021
(51) Int. Cl.: A01C 1/06

(54) **SEED TREATMENT SYSTEM AND METHOD**
SAATGUTBEHANDLUNGSSYSTEM UND -VERFAHREN
SYSTÈME ET MÉTHODE DE TRAITEMENT DES SEMENCES

(30) Priority: 23.12.2020 US 202063130404 P
(43) Date of publication of application: 01.11.2023
(73) Proprietor: Pivot Bio, Inc., Minnetonka, Minnesota 55305 (US)
(72) Inventor: BELCHER, Richard, Wilson, Berkeley, CA 94710 (US); REZAEI, Farzaneh, Berkeley, CA 94710 (US); O'BRYAN, Keith, Anthony, Berkeley, CA 94710 (US)
(74) Representative: Mathys & Squire
(86) International application number: PCT/US2021/065051
(87) International publication number: WO 2022/140656

(56) References cited:
- EP-B1- 0 346 278
- EP-B1- 2 958 415
- WO-A1-2019/152704
- WO-A1-2020/092940
- GB-A- 2 258 831
- US-A- 3 912 231
- US-A- 4 465 017
- US-A- 6 156 699

## Description

### TECHNICAL FIELD

This disclosure relates to systems and methods for treating seeds prior to planting.

### BACKGROUND

Seeds of food crops can be treated with different agents to preserve and enhance their viability. Conventional treatments are generally applied by spraying seeds with an atomized liquid that includes a treatment composition and drying the sprayed seeds prior to storage.

EP0346278 mentions a machine for moistening seeds with liquid active substances. US4465017 mentions a seed coating machine comprising an upper mixing drum wherein a liquid adhesive coating is applied to seed and where the rate of application is regulated by a valve controlled by the seed feeder. US6156699 mentions a process producing coated, singulated seeds. EP2958415 mentions a method for coating a seed with mineral particles and dried microorganisms. WO 2020/092940 mentions biofilm compositions with improved stability for nitrogen fixing microbial products.

### SUMMARY

The invention is defined according to the claims. Thus, the invention provides a seed treatment system, comprising: an inlet for receiving seeds; a treatment dispersal assembly for applying a treatment to seeds; a member configured to expose the seeds to the treatment; an outlet for discharging seeds; a first transport mechanism configured to deliver seeds from the inlet to the treatment dispersal assembly; and a second transport mechanism configured to deliver treated seeds from the treatment dispersal assembly to the outlet, wherein the member comprises a recess into which seeds are delivered by the first transport mechanism; and wherein during operation, the system is configured to: receive seeds comprising a first coating; and apply an overtreatment to the received seeds that comprises at least one microbial.

**In** one embodiment, the system is configured to apply the overtreatment to the received seeds by dispersing the seeds spatially so that the seeds do not aggregate following application of the overtreatment.

**In** one embodiment, the first coating comprises a biocide.

**In** one embodiment, the at least one microbial comprises at least one nitrogen fixing microbe.

**In** one embodiment, the overtreatment further comprises a polymer; optionally wherein the system is configured to apply the polymer and the microbial simultaneously to the seeds.

**In** one embodiment, the member is cone-shaped and positioned in a housing of the system such that an apex of member faces the inlet.

**In** one embodiment, relative to a ground surface that supports the system, the first transport mechanism is positioned below the inlet and above the treatment dispersal assembly so that seeds are transported by falling through the first transport mechanism.

**In** one embodiment, the first transport mechanism comprises a seed flow gate to adjust a transportation rate of the seeds through the first transport mechanism.

**In** one embodiment, the treatment dispersal assembly comprises an atomizer configured to generate droplets of a treatment fluid. **In** one embodiment, the atomizer is in fluid communication with a reservoir configured to contain the treatment fluid.

**In** one embodiment, the system further comprises a scattering mechanism configured to disperse received seeds onto the member.

**In** one embodiment, the overtreatment comprises a protecting agent that preserves viability of the at least one microbial.

**In** one embodiment, the overtreatment comprises more than one microbial; optionally wherein the system comprises separate reservoirs for each microbial.

**In** one embodiment, the at least one microbial comprises: (a) a genetically engineered nitrogen fixing microbe; and/or (b) a mutagenized nitrogen fixing microbe.

The invention also provides a method of treating seeds, comprising: transporting seeds comprising a first coating from an inlet of a seed treatment system into a recess of a conical member of a treatment dispersal assembly; dispersing the received seeds spatially using the member to expose the seeds to an overtreatment; applying the overtreatment to the dispersed seeds to produce treated seeds; and transporting the treated seeds to an outlet of the seed treatment system using a conveyor mechanism, optionally wherein the conveyor mechanism is a belt conveyor mechanism or an auger conveyor mechanism, wherein the overtreatment comprises at least one microbial.

This disclosure features systems and methods for applying microbial compositions to seeds. The compositions are typically applied as an overtreatment, following prior application of a coating to the seeds, and include at least one microbial. The microbial is generally a nitrogen-fixing microbe, such as a bacterium, which converts atmospheric nitrogen gas (N₂) into ammonia (NH₃) via reduction mediated by the enzyme nitrogenase. The ammonia can be incorporated into organic matter such as plant tissues, thereby contributing significantly to increased yields relative to untreated crop seeds. The systems and methods described herein can be used to ensure that microbials applied as overtreatments remain viable between the time of application and time at which the treated seeds are planted. Further, microbial-containing overtreatments are applied in a manner that does not adversely affect the viability of the underlying seed, and the efficacy of previously applied seed coatings, or coatings applied during or after seed overtreatment.

The disclosure features seed treatment systems that include an inlet for receiving seeds, a treatment dispersal assembly for applying a treatment to seeds, an outlet for discharging seeds, a first transport mechanism configured to deliver seeds from the inlet to the treatment dispersal assembly, and a second transport mechanism configured to deliver treated seeds from the treatment dispersal assembly to the outlet, where during operation, the systems are configured to receive seeds that include a first coating, and apply an overtreatment to the received seeds that comprises at least one microbial.

The system of the invention is defined in the claims. The systems described herein may include any one or more of the following features.

The systems can be configured to apply the overtreatment to the received seeds such that a stability of the microbial is maintained on the seeds following the overtreatment. The systems can be configured to apply the overtreatment to the received seeds such that a viability of the seeds is maintained following the overtreatment. The systems can be configured to apply the overtreatment to the received seeds such that an effectiveness of elements of the first coating is maintained on the seeds following the overtreatment. The systems can be configured to apply the overtreatment to the received seeds by dispersing the seeds spatially so that the seeds do not aggregate following application of the overtreatment.

The systems can be configured through adjustment of one or more of settings on an atomizer present in the treatment dispersal assembly, a flow rate of the seeds through the system, an agitation rate of seeds, a drying time for treated seeds, and a dwell time of seeds in the system.

The elements of the first coating can include a biocide. The at least one microbial can include at least one nitrogen fixing microbe. The at least one microbial can include at least one gram-negative microbe. The at least one microbial can include at least one gram-negative nitrogen fixing microbe. The at least one microbial can include at least one nitrogen-fixing bacterium. The at least one nitrogen-fixing bacterium can be selected from the group consisting of strains 137-1036, 137-2253, 137-3890, 6-5687, and any combination thereof.

The overtreatment can include a polymer. The systems can be configured to apply the polymer and the microbial simultaneously to the seeds.

The systems can include a first reservoir configured to contain the polymer, and a second reservoir configured to contain the microbial.

The systems can include a member configured to expose the seeds to the treatment. The member can be cone-shaped and positioned in a housing of the systems such that an apex of member faces the inlet. The member can include a recess into which seeds are delivered by the first transport mechanism. The recess can include surfaces that are inclined relative to a bottom surface of the member. An angle of inclination of the recess surfaces can be between 1 degree and 45 degrees.

Relative to a ground surface that supports the system, the first transport mechanism can be positioned below the inlet and above the treatment dispersal assembly so that seeds are transported by falling through the first transport mechanism. The first transport mechanism can include a seed flow gate to adjust a transportation rate of the seeds through the first transport mechanism.

The treatment dispersal assembly can include an atomizer configured to generate droplets of a treatment fluid. The atomizer can be integrated into the member. The atomizer can be in fluid communication with a reservoir configured to contain the treatment fluid. The atomizer can include a plurality of apertures configured to discharge the treatment fluid to generate the droplets. Relative to a ground surface that supports the system, the second transport mechanism can be positioned below the treatment dispersal assembly so that treated seeds fall into the second transport mechanism from the treatment dispersal assembly.

The systems can include a scattering mechanism configured to disperse received seeds onto the member. The scattering mechanism can include a plurality of apertures positioned so that received seeds are delivered to multiple surface regions of the member. The scattering mechanism can include an aperture that rotates relative to an axis of the member. The scattering mechanism can include an orifice that rotates relative to an axis of the member.

The scattering mechanism can include a first distribution member and a second distribution member, where relative to a ground surface that supports the system, the first distribution member is positioned above the second distribution member, and where during operation of the system, the treatment dispersal assembly delivers received seeds from the inlet to the first distribution member, seeds fall from the first distribution member to the second distribution member, and seeds fall from the second distribution member to the member of the treatment dispersal assembly. Each of the first and second distribution members can include a plurality of apertures.

At least one of the first and second distribution members can rotate about an axis oriented orthogonally with respect to the at least one of the first and second distribution members. The axis can extend through the at least one of the first and second distribution members.

The systems can be configured so that during operation, at least one of the first and second distribution members is displaced vertically relative to the ground surface to redistribute at least some seeds to different locations on the at least one of the first and second distribution members.

Relative to a horizontal ground surface that supports the system, the systems can be configured so that during operation, the member is displaced vertically to redistribute at least some seeds to different locations on the member. During operation, the member can be continuously displaced vertically to redistribute seeds. During operation, the member can be displaced intermittently vertically to redistribute seeds.

The treatment dispersal assembly can include a powder scattering mechanism, and during operation, the powder scattering mechanism can be configured to apply an overtreatment composition featuring the at least one microbial to the received seeds. The composition can include a dry powder featuring the at least one microbial. The composition can include granules featuring the at least one microbial.

The overtreatment can include a protecting agent that preserves viability of the at least one microbial.

The treatment dispersal assembly can include an atomizer configured to generate droplets from a liquid, and during operation, the treatment dispersal assembly can be configured to generate droplets of a liquid overtreatment composition featuring the at least one microbial and a protecting agent that preserves viability of the at least one microbial, and expose the received seeds to the droplets of the liquid overtreatment composition to coat the received seeds with the overtreatment composition. The liquid overtreatment composition can be an aqueous or non-aqueous composition. The liquid overtreatment composition can include at least one polymer or polymer precursor. The overtreatment can include more than one microbial. The systems can include separate reservoirs for each microbial.

The systems described herein may also include any of the other features described herein, and can include any combination of features, including combinations of features that are individually described in connection with different instances of systems described herein, without limitation unless expressly stated otherwise.

The disclosure features seed treatment systems that include an inlet for receiving seeds, a treatment dispersal assembly for applying a treatment to seeds, featuring a conical member configured to spatially disperse the received seeds to expose the seeds to the treatment, an outlet for discharging seeds, a first transport mechanism configured to deliver seeds from the inlet to the treatment dispersal assembly, and a belt conveyor mechanism configured to deliver treated seeds from the treatment dispersal assembly to the outlet, where during operation, the treatment dispersal assembly is configured to receive seeds delivered by the first transport mechanism and featuring a first coating, and apply an overtreatment to the received seeds that includes at least one microbial.

The system of the invention is defined in the claims. The systems described herein may include any one or more of the following features.

The belt conveyor mechanism can include a conveyor that is inclined upwards relative to a ground surface that supports the systems from an entrance of the belt conveyor mechanism to an exit of the belt conveyor mechanism. The belt conveyor mechanism can include a conveyor that is approximately parallel to a ground surface that supports the system.

The systems can be configured to apply the overtreatment to the received seeds such that a stability of the microbial is maintained on the seeds following the overtreatment. The systems can be configured to apply the overtreatment to the received seeds such that a viability of the seeds is maintained following the overtreatment. The systems can be configured to apply the overtreatment to the received seeds such that an effectiveness of elements of the first coating is maintained on the seeds following the overtreatment. The systems can be configured to apply the overtreatment to the received seeds so that the seeds do not aggregate following application of the overtreatment.

The at least one microbial can include at least one nitrogen fixing microbe. The at least one microbial can include at least one gram-negative microbe. The at least one microbial can include at least one gram-negative nitrogen fixing microbe. The at least one microbial can include at least one nitrogen-fixing bacterium. The at least one nitrogen-fixing bacterium can be selected from the group consisting of strains 137-1036, 137-2253, 137-3890, 6-5687, and any combination thereof.

The member can be positioned in a housing of the systems such that an apex of the member faces the inlet. The member can include a recess into which seeds are delivered by the first transport mechanism. The recess can include surfaces that are inclined relative to a bottom surface of the member. An angle of inclination of the recess surfaces can be between 1 degree and 30 degrees.

Relative to a ground surface that supports the system, the first transport mechanism can be positioned below the inlet and above the treatment dispersal assembly so that seeds are transported by falling through the first transport mechanism. The first transport mechanism can include a seed flow gate to adjust a transportation rate of the seeds through the first transport mechanism.

The treatment dispersal assembly can include an atomizer configured to generate droplets of a treatment fluid. The atomizer can be integrated into the member. The atomizer can be in fluid communication with a reservoir configured to contain the treatment fluid. The atomizer can include a plurality of apertures configured to discharge the treatment fluid to generate the droplets.

Relative to a ground surface that supports the system, the belt conveyor mechanism can be positioned below the treatment dispersal assembly so that treated seeds fall into the belt conveyor mechanism from the treatment dispersal assembly.

The systems can include a scattering mechanism configured to disperse received seeds onto the member. The scattering mechanism can include a plurality of apertures positioned so that received seeds are delivered to multiple surface regions of the member. The scattering mechanism can include an aperture that rotates relative to an axis of the member. The scattering mechanism can include an orifice that rotates relative to an axis of the member.

The scattering mechanism can include a first distribution member and a second distribution member, where relative to a ground surface that supports the system, the first distribution member is positioned above the second distribution member, and where during operation, the treatment dispersal assembly delivers received seeds from the inlet to the first distribution member, seeds fall from the first distribution member to the second distribution member, and seeds fall from the second distribution member to the member of the treatment dispersal assembly. Each of the first and second distribution members can include a plurality of apertures. At least one of the first and second distribution members can rotate about an axis oriented orthogonally with respect to the at least one of the first and second distribution members. The axis can extend through the at least one of the first and second distribution members.

The systems can be configured so that during operation, at least one of the first and second distribution members can be displaced vertically relative to the ground surface to redistribute at least some seeds to different locations on the at least one of the first and second distribution members. Relative to a horizontal ground surface that supports the systems, the systems can be configured so that during operation, the member is displaced vertically to redistribute at least some seeds to different locations on the member.

During operation, the member can be continuously displaced vertically to redistribute seeds. During operation, the member can be displaced intermittently vertically to redistribute seeds.

The treatment dispersal assembly can include a powder scattering mechanism, and during operation, the powder scattering mechanism can be configured to apply an overtreatment composition featuring the at least one microbial to the received seeds. The composition can include a dry powder featuring the at least one microbial. The composition can include granules featuring the at least one microbial. The overtreatment can include a protecting agent that preserves viability of the at least one microbial.

The treatment dispersal assembly can include an atomizer configured to generate droplets from a liquid, and during operation, the treatment dispersal assembly can be configured to generate droplets of a liquid overtreatment composition featuring the at least one microbial and a protecting agent that preserves viability of the at least one microbial, and expose the received seeds to the droplets of the liquid overtreatment composition to coat the received seeds with the overtreatment composition. The liquid overtreatment composition can be an aqueous or non-aqueous composition. The liquid overtreatment composition can include at least one polymer or polymer precursor. The overtreatment can include more than one microbial. The systems can include separate reservoirs for each microbial.

The systems can be configured through adjustment of one or more of settings on an atomizer present in the treatment dispersal assembly, a flow rate of the seeds through the system, an agitation rate of seeds, a drying time for treated seeds, and a dwell time of seeds in the system.

The first coating can include a biocide.

The overtreatment can include a polymer. The systems can include a first reservoir configured to contain the polymer, and a second reservoir configured to contain the microbial.

The systems described herein may also include any of the other features described herein, and can include any combination of features, including combinations of features that are individually described in connection with different instances of systems described herein, without limitation unless expressly stated otherwise.

The disclosure features seed treatment systems that include an inlet for receiving seeds, a treatment dispersal assembly for applying a treatment to seeds, featuring a conical member configured to spatially disperse the received seeds to expose the seeds to the treatment, an outlet for discharging seeds, a first transport mechanism configured to deliver seeds from the inlet to the treatment dispersal assembly, and an auger mechanism configured to deliver treated seeds from the treatment dispersal assembly to the outlet, where during operation, the treatment dispersal assembly is configured to receive seeds delivered by the first transport mechanism and featuring a first coating, and apply an overtreatment to the received seeds that includes at least one microbial.

The systems described herein may include any one or more of the following features.

The systems can be configured to apply the overtreatment to the received seeds such that a stability of the microbial is maintained on the seeds following the overtreatment. The systems can be configured to apply the overtreatment to the received seeds such that a viability of the seeds is maintained following the overtreatment. The systems can be configured to apply the overtreatment to the received seeds such that an effectiveness of elements of the first coating is maintained on the seeds following the overtreatment. The systems can be configured to apply the overtreatment to the received seeds so that the seeds do not aggregate following application of the overtreatment.

The at least one microbial can include at least one nitrogen fixing microbe. The at least one microbial can include at least one gram-negative microbe. The at least one microbial can include at least one gram-negative nitrogen fixing microbe. The at least one microbial can include at least one nitrogen-fixing bacterium. The at least one nitrogen-fixing bacterium can be selected from the group consisting of strains 137-1036, 137-2253, 137-3890, 6-5687, and any combination thereof.

The member can be positioned in a housing of the system such that an apex of the member faces the inlet. The member can include a recess into which seeds are delivered by the first transport mechanism. The recess can include surfaces that are inclined relative to a bottom surface of the member. An angle of inclination of the recess surfaces can be between 1 degree and 30 degrees.

Relative to a ground surface that supports the systems, the first transport mechanism can be positioned below the inlet and above the treatment dispersal assembly so that seeds are transported by falling through the first transport mechanism. The first transport mechanism can include a seed flow gate to adjust a transportation rate of the seeds through the first transport mechanism.

The treatment dispersal assembly can include an atomizer configured to generate droplets of a treatment fluid. The atomizer can be integrated into the member. The atomizer can be in fluid communication with a reservoir configured to contain the treatment fluid. The atomizer can include a plurality of apertures configured to discharge the treatment fluid to generate the droplets.

Relative to a ground surface that supports the systems, the auger conveyor mechanism can be positioned below the treatment dispersal assembly so that treated seeds fall into the auger conveyor mechanism from the treatment dispersal assembly.

The systems can include a scattering mechanism configured to disperse received seeds onto the member. The scattering mechanism can include a plurality of apertures positioned so that received seeds are delivered to multiple surface regions of the member. The scattering mechanism can include an aperture that rotates relative to an axis of the member. The scattering mechanism can include an orifice that rotates relative to an axis of the member.

The scattering mechanism can include a first distribution member and a second distribution member, where relative to a ground surface that supports the systems, the first distribution member can be positioned above the second distribution member, and where during operation, the treatment dispersal assembly delivers received seeds from the inlet to the first distribution member, seeds fall from the first distribution member to the second distribution member, and seeds fall from the second distribution member to the member of the treatment dispersal assembly. Each of the first and second distribution members can include a plurality of apertures. At least one of the first and second distribution members can rotate about an axis oriented orthogonally with respect to the at least one of the first and second distribution members. The axis can extend through the at least one of the first and second distribution members.

The systems can be configured so that during operation, at least one of the first and second distribution members is displaced vertically relative to the ground surface to redistribute at least some seeds to different locations on the at least one of the first and second distribution members. Relative to a horizontal ground surface that supports the systems, the systems can be configured so that during operation, the member is displaced vertically to redistribute at least some seeds to different locations on the member.

During operation, the member can be continuously displaced vertically to redistribute seeds. During operation, the member can be displaced intermittently vertically to redistribute seeds.

The treatment dispersal assembly can include a powder scattering mechanism, and during operation, the powder scattering mechanism can be configured to apply an overtreatment composition featuring the at least one microbial to the received seeds. The composition can include a dry powder featuring the at least one microbial. The composition can include granules featuring the at least one microbial. The overtreatment can include a protecting agent that preserves viability of the at least one microbial.

The treatment dispersal assembly can include an atomizer configured to generate droplets from a liquid, and during operation, the treatment dispersal assembly can be configured to generate droplets of a liquid overtreatment composition featuring the at least one microbial and a protecting agent that preserves viability of the at least one microbial, and expose the received seeds to the droplets of the liquid overtreatment composition to coat the received seeds with the overtreatment composition. The liquid overtreatment composition can be an aqueous or non-aqueous composition. The liquid overtreatment composition can include at least one polymer or polymer precursor.

The systems can be configured through adjustment of one or more of settings on an atomizer present in the treatment dispersal assembly, a flow rate of the seeds through the system, an agitation rate of seeds, a drying time for treated seeds, and a dwell time of seeds in the system.

The first coating can include a biocide. The overtreatment can include a polymer. The systems can include a first reservoir configured to contain the at least one polymer or polymer precursor, and a second reservoir configured to contain the microbial. The overtreatment can include more than one microbial. The systems can include separate reservoirs for each microbial.

The systems described herein may also include any of the other features described herein, and can include any combination of features, including combinations of features that are individually described in connection with different instances of systems described herein, without limitation unless expressly stated otherwise.

The disclosure features methods of treating seeds that include transporting seeds having a first coating from an inlet to a member of a treatment dispersal assembly, and applying an overtreatment to the seeds on the member, where the overtreatment includes at least one microbial.

The methods described herein may include any one or more of the following features.

The methods can include applying the overtreatment to the seeds such that a stability of the microbial is maintained on the seeds following the overtreatment. The methods can include applying the overtreatment to the seeds such that a viability of the seeds is maintained following the overtreatment. The methods can include applying the overtreatment to the seeds such that an effectiveness of elements of the first coating is maintained on the seeds following the overtreatment. The methods can include applying the overtreatment to the seeds such that the seeds do not aggregate following application of the overtreatment.

The at least one microbial can include at least one nitrogen fixing microbe. The at least one microbial can include at least one gram-negative microbe. The at least one microbial can include at least one gram-negative nitrogen fixing microbe. The at least one microbial can include at least one nitrogen-fixing bacterium. The at least one nitrogen-fixing bacterium can be selected from the group consisting of strains 137-1036, 137-2253, 137-3890, 6-5687, and any combination thereof.

The member can be cone-shaped and positioned so that an apex of the member faces the inlet. The methods can include delivering the seeds into a recess of the member prior to applying the overtreatment. The recess can include surfaces that are inclined relative to a bottom surface of the member. An angle of inclination of the recess surfaces can be between 1 degree and 30 degrees.

The methods can include transporting the seeds by allowing the seeds to fall from the inlet to the member. The methods can include adjusting a transportation rate of the seeds from the inlet to the member. The methods can include generating droplets of a treatment fluid and exposing the seeds to the droplets to apply the overtreatment to the seeds. The methods can include discharging the treatment fluid through a plurality of apertures of an atomizer to generate the droplets.

The methods can include transporting the seeds through a scattering mechanism configured to disperse the seeds onto the member. The scattering mechanism can include a plurality of apertures positioned so that the seeds are delivered to multiple surface regions of the member. The methods can include rotating an aperture of the scattering mechanism relative to an axis of the member to deliver the seeds to the multiple surface regions of the member. The methods can include rotating an orifice of the scattering mechanism relative to an axis of the member to deliver the seeds to the multiple surface regions of the member. Transporting the seeds through a scattering mechanism can include delivering the seeds from the inlet to a first distribution member of the scattering mechanism, allowing the seeds to fall from the first distribution member to a second distribution member of the scattering mechanism, and allowing the seeds to fall from the second distribution member to the member of the treatment dispersal assembly. Each of the first and second distribution members can include a plurality of apertures.

The methods can include rotating at least one of the first and second distribution members about an axis oriented orthogonally with respect to the at least one of the first and second distribution members. The axis can extend through the at least one of the first and second distribution members.

The methods can include displacing at least one of the and second distribution members vertically relative to a ground surface to redistribute at least some seeds to different locations on the at least one of the first and second distribution members. The methods can include displacing the member vertically relative to a horizontal ground surface to redistribute at least some seeds to different locations on the member. The methods can include continuously displacing the member vertically to redistribute seeds. The methods can include intermittently displacing the member vertically to redistribute seeds.

The methods can include applying an overtreatment composition featuring the at least one microbial to the received seeds using a powder scattering mechanism. The composition can include a dry powder featuring the at least one microbial. The composition can include granules featuring the at least one microbial. The composition can include a protecting agent that preserves viability of the at least one microbial.

The overtreatment can include a liquid overtreatment composition featuring the at least one microbial and a protecting agent that preserves viability of the at least one microbial, and the methods can include generating droplets of the overtreatment composition from an atomizer, and exposing the received seeds to the droplets of the overtreatment composition to coat the received seeds with the overtreatment composition. The liquid overtreatment composition can be an aqueous or non-aqueous composition. The liquid overtreatment composition can include at least one polymer or polymer precursor.

The methods can include adjusting one or more of settings on an atomizer that applies the overtreatment to the seeds, a flow rate of the seeds during application of the overtreatment, an agitation rate of seeds during drying of the applied overtreatment, a drying time for the overtreated seeds, and a dwell time of seeds following application of the overtreatment.

The first coating can include a biocide. The overtreatment can include a polymer. The methods can include retrieving the polymer from a first reservoir and retrieving the microbial from a second reservoir. The overtreatment can include more than one microbial. The methods can include retrieving each microbial from a separate reservoir.

The methods described herein may also include any of the other features described herein, and can include any combination of features, including combinations of features that are individually described in connection with different instances of systems described herein, without limitation unless expressly stated otherwise.

The disclosure features methods of treating seeds that include transporting seeds having a first coating from an inlet of a seed treatment system to a member of a treatment dispersal assembly, dispersing the received seeds spatially using the member, applying an overtreatment to the dispersed seeds to produce treated seeds, and transporting the treated seeds to an outlet of the seed treatment system using a belt conveyor mechanism, where the overtreatment includes at least one microbial.

The methods described herein may include any one or more of the following features.

The methods can include applying the overtreatment to the seeds such that a stability of the microbial is maintained on the seeds following the overtreatment. The methods can include applying the overtreatment to the seeds such that a viability of the seeds is maintained following the overtreatment. The methods can include applying the overtreatment to the seeds such that an effectiveness of elements of the first coating is maintained on the seeds following the overtreatment. The methods can include applying the overtreatment to the seeds such that the seeds do not aggregate following application of the overtreatment.

The at least one microbial can include at least one nitrogen fixing microbe. The at least one microbial can include at least one gram-negative microbe. The at least one microbial can include at least one gram-negative nitrogen fixing microbe. The at least one microbial can include at least one nitrogen-fixing bacterium. The at least one nitrogen-fixing bacterium can be selected from the group consisting of strains 137-1036, 137-2253, 137-3890, 6-5687, and any combination thereof.

The member can be cone-shaped and positioned so that an apex of the member faces the inlet. The methods can include delivering the seeds into a recess of the member prior to applying the overtreatment. The recess can include surfaces that are inclined relative to a bottom surface of the member. An angle of inclination of the recess surfaces can be between 1 degree and 30 degrees.

The methods can include transporting the seeds by allowing the seeds to fall from the inlet to the member. The methods can include adjusting a transportation rate of the seeds from the inlet to the member. The methods can include generating droplets of a treatment fluid and exposing the seeds to the droplets to apply the overtreatment to the seeds. The methods can include discharging the treatment fluid through a plurality of apertures of an atomizer to generate the droplets. The methods can include transporting the seeds through a scattering mechanism configured to disperse the seeds onto the member. The scattering mechanism can include a plurality of apertures positioned so that the seeds are delivered to multiple surface regions of the member. The methods can include rotating an aperture of the scattering mechanism relative to an axis of the member to deliver the seeds to the multiple surface regions of the member. The methods can include rotating an orifice of the scattering mechanism relative to an axis of the member to deliver the seeds to the multiple surface regions of the member.

Transporting the seeds through a scattering mechanism can include delivering the seeds from the inlet to a first distribution member of the scattering mechanism, allowing the seeds to fall from the first distribution member to a second distribution member of the scattering mechanism, and allowing the seeds to fall from the second distribution member to the member of the treatment dispersal assembly. Each of the first and second distribution members can include a plurality of apertures.

The methods can include rotating at least one of the first and second distribution members about an axis oriented orthogonally with respect to the at least one of the first and second distribution members. The axis can extend through the at least one of the first and second distribution members.

The methods can include displacing at least one of the and second distribution members vertically relative to a ground surface to redistribute at least some seeds to different locations on the at least one of the first and second distribution members. The methods can include displacing the member vertically relative to a horizontal ground surface to redistribute at least some seeds to different locations on the member. The methods can include continuously displacing the member vertically to redistribute seeds. The methods can include intermittently displacing the member vertically to redistribute seeds.

The methods can include applying an overtreatment composition featuring the at least one microbial to the received seeds using a powder scattering mechanism. The composition can include a dry powder featuring the at least one microbial. The composition can include granules featuring the at least one microbial. The composition can include a protecting agent that preserves viability of the at least one microbial.

The overtreatment can include a liquid overtreatment composition featuring the at least one microbial and a protecting agent that preserves viability of the at least one microbial, and the methods can include generating droplets of the overtreatment composition from an atomizer, and exposing the received seeds to the droplets of the overtreatment composition to coat the received seeds with the overtreatment composition. The liquid overtreatment composition can be an aqueous or non-aqueous composition. The liquid overtreatment composition can include at least one polymer or polymer precursor.

The methods can include adjusting one or more of settings on an atomizer that applies the overtreatment to the seeds, a flow rate of the seeds during application of the overtreatment, an agitation rate of seeds during drying of the applied overtreatment, a drying time for the overtreated seeds, and a dwell time of seeds following application of the overtreatment.

The first coating can include a biocide. The overtreatment can include a polymer. The methods can include retrieving the polymer from a first reservoir and retrieving the microbial from a second reservoir. The overtreatment can include more than one microbial. The methods can include retrieving each microbial from a separate reservoir.

The methods described herein may also include any of the other features described herein, and can include any combination of features, including combinations of features that are individually described in connection with different instances of systems described herein, without limitation unless expressly stated otherwise.

The disclosure features methods of treating seeds that include transporting seeds having a first coating from an inlet of a seed treatment system to a member of a treatment dispersal assembly, dispersing the received seeds spatially using the member, applying an overtreatment to the seeds on the member to produce treated seeds, and transporting the treated seeds to an outlet of the seed treatment system using an auger conveyor mechanism,
wherein the overtreatment includes at least one microbial.

The methods described herein may include any one or more of the following features.

The methods can include applying the overtreatment to the seeds such that a stability of the microbial is maintained on the seeds following the overtreatment. The methods can include applying the overtreatment to the seeds such that a viability of the seeds is maintained following the overtreatment. The methods can include applying the overtreatment to the seeds such that an effectiveness of elements of the first coating is maintained on the seeds following the overtreatment. The methods can include applying the overtreatment to the seeds such that the seeds do not aggregate following application of the overtreatment.

The at least one microbial can include at least one nitrogen fixing microbe. The at least one microbial can include at least one gram-negative microbe. The at least one microbial can include at least one gram-negative nitrogen fixing microbe. The at least one microbial can include at least one nitrogen-fixing bacterium. The at least one nitrogen-fixing bacterium can be selected from the group consisting of strains 137-1036, 137-2253, 137-3890, 6-5687, and any combination thereof.

The member can be cone-shaped and positioned so that an apex of the member faces the inlet. The methods can include delivering the seeds into a recess of the member prior to applying the overtreatment. The recess includes surfaces that are inclined relative to a bottom surface of the member. An angle of inclination of the recess surfaces can be between 1 degree and 30 degrees.

The methods can include transporting the seeds by allowing the seeds to fall from the inlet to the member. The methods can include adjusting a transportation rate of the seeds from the inlet to the member. The methods can include generating droplets of a treatment fluid and exposing the seeds to the droplets to apply the overtreatment to the seeds. The methods can include discharging the treatment fluid through a plurality of apertures of an atomizer to generate the droplets. The methods can include transporting the seeds through a scattering mechanism configured to disperse the seeds onto the member. The scattering mechanism can include a plurality of apertures positioned so that the seeds are delivered to multiple surface regions of the member. The methods can include rotating an aperture of the scattering mechanism relative to an axis of the member to deliver the seeds to the multiple surface regions of the member. The methods can include rotating an orifice of the scattering mechanism relative to an axis of the member to deliver the seeds to the multiple surface regions of the member.

Transporting the seeds through a scattering mechanism can include delivering the seeds from the inlet to a first distribution member of the scattering mechanism, allowing the seeds to fall from the first distribution member to a second distribution member of the scattering mechanism, and allowing the seeds to fall from the second distribution member to the member of the treatment dispersal assembly. Each of the first and second distribution members can include a plurality of apertures. The methods can include rotating at least one of the first and second distribution members about an axis oriented orthogonally with respect to the at least one of the first and second distribution members. The axis can extend through the at least one of the first and second distribution members.

The methods can include displacing at least one of the and second distribution members vertically relative to a ground surface to redistribute at least some seeds to different locations on the at least one of the first and second distribution members. The methods can include displacing the member vertically relative to a horizontal ground surface to redistribute at least some seeds to different locations on the member. The methods can include continuously displacing the member vertically to redistribute seeds. The methods can include intermittently displacing the member vertically to redistribute seeds.

The methods can include applying an overtreatment composition featuring the at least one microbial to the received seeds using a powder scattering mechanism. The composition can include a dry powder comprising the at least one microbial. The composition can include granules featuring the at least one microbial. The composition can include a protecting agent that preserves viability of the at least one microbial.

The overtreatment can include a liquid overtreatment composition featuring the at least one microbial and a protecting agent that preserves viability of the at least one microbial, and the methods can include generating droplets of the overtreatment composition from an atomizer and exposing the received seeds to the droplets of the overtreatment composition to coat the received seeds with the overtreatment composition. The liquid overtreatment composition can be an aqueous or non-aqueous composition. The liquid overtreatment composition can include at least one polymer or polymer precursor.

The methods can include adjusting one or more of settings on an atomizer that applies the overtreatment to the seeds, a flow rate of the seeds during application of the overtreatment, an agitation rate of seeds during drying of the applied overtreatment, a drying time for the overtreated seeds, and a dwell time of seeds following application of the overtreatment.

The first coating can include a biocide. The overtreatment can include a polymer. The methods can include retrieving the polymer from a first reservoir and retrieving the microbial from a second reservoir. The overtreatment can include more than one microbial. The methods can include retrieving each microbial from a separate reservoir.

The methods described herein may also include any of the other features described herein, and can include any combination of features, including combinations of features that are individually described in connection with different instances of systems described herein, without limitation unless expressly stated otherwise.

The disclosure features agricultural compositions that include a plant seed featuring a first coating and an overtreatment, where the overtreatment includes at least one microbial.

The agricultural compositions described herein may include any one or more of the following features.

The plant seed can be a corn seed.

The first coating can include a biocide. The overtreatment can include a polymer. The overtreatment can include more than one microbial.

The at least one microbial can include a nitrogen fixing microbe. The at least one microbial can include at least one gram-negative microbe. The at least one microbial can include at least one gram-negative nitrogen fixing microbe. The at least one microbial can include at least one nitrogen-fixing bacterium. The at least one nitrogen-fixing bacterium can be selected from the group consisting of strains 137-1036, 137-2253, 137-3890, 6-5687, and any combination thereof.

The plant seed can be viable to grow into a plant. The first coating can have biocidal activity. The at least one microbial can provide fixed nitrogen to a plant grown from the plant seed.

The agricultural compositions described herein may also include any of the other features described herein, and can include any combination of features, including combinations of features that are individually described in connection with different instances of systems described herein, without limitation unless expressly stated otherwise.

The use of the terms "a" and "an" and "the" and similar referents in the context of describing the disclosure (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. For example, if the range 10-15 is disclosed, then 11, 12, 13, and 14 are also disclosed. All methods described herein can be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed.

As used herein, the term "about" is used synonymously with the term "approximately." Illustratively, the use of the term "about" with regard to an amount indicates that values slightly outside the cited values, e.g., plus or minus 0.1% to 10%.

Some disclosures herein relate to a computer storage product with a nontransitory computer-readable medium (also can be referred to as a non-transitory processor-readable medium) having instructions or computer code thereon for performing various computer-implemented operations. The computer-readable medium (or processor-readable medium) is nontransitory in the sense that it does not include transitory propagating signals per se (e.g., a propagating electromagnetic wave carrying information on a transmission medium such as space or a cable). The media and computer code (also can be referred to as code) may be those designed and constructed for the specific purpose or purposes. Examples of non-transitory computer-readable media include, but are not limited to, magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other disclosures herein relate to a computer program product, which can include, for example, the instructions and/or computer code discussed herein.

Some methods described herein can be performed by software (executed on hardware), hardware, or a combination thereof. Hardware modules may include, for example, a general-purpose processor, a field programmable gate array (FPGA), and/or an application specific integrated circuit (ASIC). Software modules (executed on hardware) can be expressed in a variety of software languages (e.g., computer code), including C, C++, Java^{™}, Ruby, Visual Basic^{™}, and/or other object-oriented, procedural, or other programming language and development tools. Examples of computer code include, but are not limited to, micro-code or micro-instructions, machine instructions, such as produced by a compiler, code used to produce a web service, and files containing higher-level instructions that are executed by a computer using an interpreter. For example, methods may be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code.

The term "processor" should be interpreted broadly to encompass a general purpose processor, a central processing unit (CPU), a microprocessor, a digital signal processor (DSP), a controller, a microcontroller, a state machine and so forth. Under some circumstances, a "processor" may refer to an application specific integrated circuit (ASIC), a programmable logic device (PLD), a field programmable gate array (FPGA), etc. The term "processor" may refer to a combination of processing devices, e.g., a combination of a DSP and a microprocessor, a plurality of microprocessors, one or more microprocessors in conjunction with a DSP core or any other such configuration.

The term "memory" should be interpreted broadly to encompass any electronic component capable of storing electronic information. The term memory may refer to various types of processor-readable media such as random access memory (RAM), read-only memory (ROM), non-volatile random access memory (NVRAM), programmable read-only memory (PROM), erasable programmable read only memory (EPROM), electrically erasable PROM (EEPROM), flash memory, magnetic or optical data storage, registers, etc. Memory is said to be in electronic communication with a processor if the processor can read information from and/or write information to the memory. Memory that is integral to a processor is in electronic communication with the processor.

The terms "instructions" and "code" should be interpreted broadly to include any type of computer-readable statement(s). For example, the terms "instructions" and "code" may refer to one or more programs, routines, sub-routines, functions, procedures, etc. "Instructions" and "code" may comprise a single computer-readable statement or many computer-readable statements.

No language in the specification should be construed as indicating any non-claimed element as essential to the practice of the disclosure. Unless otherwise defined, all technical and scientific terms used herein have the same meaning as commonly understood by one of ordinary skill in the art to which this disclosure belongs. Although methods and materials similar or equivalent to those described herein can be used in the practice or testing of the subject matter herein, suitable methods and materials are described below. In case of conflict, the present specification, including definitions, will control. In addition, the materials, methods, and examples are illustrative only and not intended to be limiting.

The details of one or more instances are set forth in the accompanying drawings and the description below. Other features and advantages will be apparent from the description, drawings, and claims.

### DESCRIPTION OF DRAWINGS

FIG. 1 is a schematic diagram of an example of a seed treatment system.
FIG. 2A is a schematic diagram of a portion of an example of a seed treatment system that includes a rotating support member.
FIG. 2B is a schematic diagram of an example of a rotating support member.
FIG. 2C is a schematic diagram of another example of a rotating support member.
FIG. 2D is a schematic diagram of an example of a support member with an integrated atomizer.
FIG. 3 is a schematic diagram of a portion of an example of a seed treatment system with a scattering mechanism.
FIG. 4 is a schematic diagram of an example of a powder scattering mechanism.
FIG. 5 is a graph showing viability of seeds on which an overtreatment was applied using a laboratory seed treater and a commercial-scale seed treater.
FIG. 6 is a graph showing viability of seeds on which an overtreatment was applied using a laboratory seed treater and a different commercial-scale seed treater.
FIG. 7 is a graph showing cold and warm germination rates for seeds on which an overtreatment was applied using a laboratory seed treater and a commercial-scale seed treater.
FIG. 8 is a graph showing cold and warm germination rates for seeds on which an overtreatment was applied using a laboratory seed treater and a different commercial-scale seed treater.
FIG. 9 is a graph showing flowability for seeds on which an overtreatment was applied using a laboratory seed treater and a commercial-scale seed treater.
FIG. 10 is a graph showing flowability for seeds on which an overtreatment was applied using a laboratory seed treater and a different commercial-scale seed treater.
FIG. 11 is a graph showing plantability for seeds on which an overtreatment was applied using a laboratory seed treater and a commercial-scale seed treater.
FIG. 12 is a graph showing plantability for seeds on which an overtreatment was applied using a laboratory seed treater and a different commercial-scale seed treater.
FIG. 13 is a graph showing a dust-off rate for seeds on which an overtreatment was applied using a laboratory seed treater and a commercial-scale seed treater.
FIG. 14 is a graph showing a dust-off rate for seeds on which an overtreatment was applied using a laboratory seed treater and a different commercial-scale seed treater.
FIG. 15 is a plot showing measured on-seed microbial viability of a microbial seed treatment overtreated onto multiple commercial corn hybrids using commercial seed treaters.
FIG. 16 is a graph showing stand count differences among trial locations for untreated and seeds and seeds to which an overtreatment was applied.
FIG. 17 is a graph showing nitrogen yield per acre from non-treated seeds and seeds to which a microbial overtreatment was applied, when the application of synthetic nitrogen fertilizer is reduced by 40 lbs./acre.

Like reference symbols in the various drawings indicate like elements.

### DETAILED DESCRIPTION

### Introduction

Biological nitrogen fixation (BNF) is a process by which plant-associated microbes such as bacteria are believed to be able to provide nitrogen to host plants. Nitrogen is an important nutrient that influences plant growth. In particular, nitrogen is present in both amino acids and chlorophyll pigments, and a wide variety of biological processes, including plant-based protein synthesis and photosynthesis, therefore depend on the availability of nitrogen. When adequate soluble nitrogen is not available in a plant's growth medium, vegetative growth may be retarded and fruit production attenuated.

Typically, fixation of atmospheric nitrogen gas to yield soluble ammonia occurs via naturally occurring microbes such as bacteria. Nitrogenases present in the bacteria catalyze atmospheric nitrogen reduction. Significant research activity is currently directed to engineering improved microbes that enhance reductive conversion of atmospheric nitrogen to ammonia. An important aspect of this activity is measurement of nitrogen incorporation in plant tissues, and evaluation of engineered microbe strains for their nitrogen fixing activity.

In some cases, nitrogen fixation pathway may act as a target for genetic engineering and optimization. One trait that may be targeted for regulation is nitrogen fixation. Nitrogen fertilizer is the largest operational expense on a farm and the biggest driver of higher yields in row crops like corn and wheat. While some endophytes have the genetics necessary for fixing nitrogen in pure culture, the fundamental technical challenge is that wild-type endophytes of cereals and grasses stop fixing nitrogen in fertilized fields. The application of chemical fertilizers and residual nitrogen levels in field soils signal the microbe to shut down the biochemical pathway for nitrogen fixation.

Changes to the transcriptional and post-translational levels of components of the nitrogen fixation regulatory network may be beneficial to the development of a microbe capable of fixing and transferring nitrogen to corn in the presence of fertilizer.

In order to utilize elemental nitrogen (N) for chemical synthesis, life forms combine nitrogen gas (N₂) available in the atmosphere with hydrogen in a process known as nitrogen fixation. Because of the energy-intensive nature of biological nitrogen fixation, diazotrophs (bacteria and archaea that fix atmospheric nitrogen gas) have evolved sophisticated and tight regulation of the *nif* gene cluster in response to environmental oxygen and available nitrogen. *Nif* genes encode enzymes involved in nitrogen fixation (such as the nitrogenase complex) and proteins that regulate nitrogen fixation. Shamseldin (2013. Global J. Biotechnol. Biochem. 8(4):84-94) discloses detailed descriptions of *nif* genes and their products. Described herein are methods of producing a plant with an improved trait comprising isolating bacteria from a first plant, introducing a genetic variation into a gene of the isolated bacteria to increase nitrogen fixation, exposing a second plant to the variant bacteria, isolating bacteria from the second plant having an improved trait relative to the first plant, and repeating the steps with bacteria isolated from the second plant.

In Proteobacteria, regulation of nitrogen fixation centers around the σ54-dependent enhancer-binding protein NifA, the positive transcriptional regulator of the *nif* cluster. Intracellular levels of active NifA are controlled by two key factors: transcription of the *nifLA* operon, and inhibition of NifA activity by protein-protein interaction with NifL. Both of these processes are responsive to intracellular glutamine levels *via* the PII protein signaling cascade. This cascade is mediated by GlnD, which directly senses glutamine and catalyzes the uridylylation or deuridylylation of two PII regulatory proteins - GlnB and GlnK - in response the absence or presence, respectively, of bound glutamine. Under conditions of nitrogen excess, unmodified GlnB signals the deactivation of the nifLA promoter. However, under conditions of nitrogen limitation, GlnB is post-translationally modified, which inhibits its activity and leads to transcription of the nifLA operon. In this way, nifLA transcription is tightly controlled in response to environmental nitrogen via the PII protein signaling cascade. On the post-translational level of NifA regulation, GlnK inhibits the NifL/NifA interaction in a matter dependent on the overall level of free GlnK within the cell.

NifA is transcribed from the *nifLA* operon, whose promoter is activated by phosphorylated NtrC, another σ54-dependent regulator. The phosphorylation state of NtrC is mediated by the histidine kinase NtrB, which interacts with deuridylylated GlnB but not uridylylated GlnB. Under conditions of nitrogen excess, a high intracellular level of glutamine leads to deuridylylation of GlnB, which then interacts with NtrB to deactivate its phosphorylation activity and activate its phosphatase activity, resulting in dephosphorylation of NtrC and the deactivation of the *nifLA* promoter. However, under conditions of nitrogen limitation, a low level of intracellular glutamine results in uridylylation of GlnB, which inhibits its interaction with NtrB and allows the phosphorylation of NtrC and transcription of the *nifLA* operon. In this way, *nifLA* expression is tightly controlled in response to environmental nitrogen *via* the PII protein signaling cascade. *nifA, ntrB, ntrC,* and *glnB,* are all genes that can be mutated in the methods described herein. These processes may also be responsive to intracellular or extracellular levels of ammonia, urea or nitrates.

The activity of NifA is also regulated post-translationally in response to environmental nitrogen, most typically through NifL-mediated inhibition of NifA activity. In general, the interaction of NifL and NifA is influenced by the PII protein signaling cascade *via* GlnK, although the nature of the interactions between GlnK and NifL/NifA varies significantly between diazotrophs. In *Klebsiella pneumoniae,* both forms of GlnK inhibit the NifL/NifA interaction, and the interaction between GlnK and NifL/NifA is determined by the overall level of free GlnK within the cell. Under nitrogen-excess conditions, deuridylylated GlnK interacts with the ammonium transporter AmtB, which serves to both block ammonium uptake by AmtB and sequester GlnK to the membrane, allowing inhibition of NifA by NifL. On the other hand, in *Azotobacter vinelandii,* interaction with deuridylylated GlnK is required for the NifL/NifA interaction and NifA inhibition, while uridylylation of GlnK inhibits its interaction with NifL. In diazotrophs lacking the *nifL* gene, there is evidence that NifA activity is inhibited directly by interaction with the deuridylylated forms of both GlnK and GlnB under nitrogen-excess conditions. In some bacteria the *Nif* cluster may be regulated by *glnR,* and further in some cases this may comprise negative regulation.

Regardless of the mechanism, post-translational inhibition of NifA is an important regulator of the *nif* cluster in most known diazotrophs. Additionally, *nifL, amtB,* glnK, and *glnR* are genes that can be mutated in the methods described herein.

In addition to regulating the transcription of the *nif* gene cluster, many diazotrophs have evolved a mechanism for the direct post-translational modification and inhibition of the nitrogenase enzyme itself, known as nitrogenase shutoff. This is mediated by ADP-ribosylation of the Fe protein (NifH) under nitrogen-excess conditions, which disrupts its interaction with the MoFe protein complex (NifDK) and abolishes nitrogenase activity. DraT catalyzes the ADPribosylation of the Fe protein and shutoff of nitrogenase, while DraG catalyzes the removal of ADP-ribose and reactivation of nitrogenase. As with *nifLA* transcription and NifA inhibition, nitrogenase shutoff is also regulated *via* the PII protein signaling cascade. Under nitrogen-excess conditions, deuridylylated GlnB interacts with and activates DraT, while deuridylylated GlnK interacts with both DraG and AmtB to form a complex, sequestering DraG to the membrane. Under nitrogen-limiting conditions, the uridylylated forms of GlnB and GlnK do not interact with DraT and DraG, respectively, leading to the inactivation of DraT and the diffusion of DraG to the Fe protein, where it removes the ADP-ribose and activates nitrogenase. The methods described herein also contemplate introducing genetic variation into the *nifH, nifD, nifK,* and *draT* genes.

Although some endophytes have the ability to fix nitrogen *in vitro,* often the genetics are silenced in the field by high levels of exogenous chemical fertilizers. One can decouple the sensing of exogenous nitrogen from expression of the nitrogenase enzyme to facilitate field-based nitrogen fixation. Improving the integral of nitrogenase activity across time further serves to augment the production of nitrogen for utilization by the crop. Specific targets for genetic variation to facilitate field-based nitrogen fixation using the methods described herein include one or more genes selected from the group consisting of *nifA, nifL, ntrB, ntrC, glnA, glnB, glnK, draT, amtB,* gln*D*, *glnE, nifJ, nifH, nifD, nifK , nifY, nifE, nifN, nifU, nifS, nifV, nifW, nifZ, nifM, nifF, nifB,* and *nifQ.*

An additional target for genetic variation to facilitate field-based nitrogen fixation using the methods described herein is the NifA protein. The NifA protein is typically the activator for expression of nitrogen fixation genes. Increasing the production of NifA (either constitutively or during high ammonia condition) circumvents the native ammonia-sensing pathway. In addition, reducing the production of NifL proteins, a known inhibitor of NifA, also leads to an increased level of freely active NifA. In addition, increasing the transcription level of the nifAL operon (either constitutively or during high ammonia condition) also leads to an overall higher level of NifA proteins. Elevated level of nifAL expression is achieved by altering the promoter itself or by reducing the expression of NtrB (part of ntrB and ntrC signaling cascade that originally would result in the shutoff of nifAL operon during high nitrogen condition). High level of NifA achieved by these or any other methods described herein increases the nitrogen fixation activity of the endophytes.

Another target for genetic variation to facilitate field-based nitrogen fixation using the methods described herein is the GlnD/GlnB/GlnK PII signaling cascade. The intracellular glutamine level is sensed through the GlnD/GlnB/GlnK PII signaling cascade. Active site mutations in GlnD that abolish the uridylyl-removing activity of GlnD disrupt the nitrogen-sensing cascade. In addition, reduction of the GlnB concentration short circuits the glutamine-sensing cascade. These mutations "trick" the cells into perceiving a nitrogen-limited state, thereby increasing the nitrogen fixation level activity. These processes may also be responsive to intracellular or extracellular levels of ammonia, urea or nitrates.

The amtB protein is also a target for genetic variation to facilitate field-based nitrogen fixation using the methods described herein. Ammonia uptake from the environment can be reduced by decreasing the expression level of amtB protein. Without intracellular ammonia, the endophyte is not able to sense the high level of ammonia, preventing the down-regulation of nitrogen fixation genes. Any ammonia that manages to get into the intracellular compartment is converted into glutamine. Intracellular glutamine level is the major currency of nitrogen sensing. Decreasing the intracellular glutamine level prevents the cells from sensing high ammonium levels in the environment. This effect can be achieved by increasing the expression level of glutaminase, an enzyme that converts glutamine into glutamate. In addition, intracellular glutamine can also be reduced by decreasing glutamine synthase (an enzyme that converts ammonia into glutamine). In diazotrophs, fixed ammonia is quickly assimilated into glutamine and glutamate to be used for cellular processes. Disruptions to ammonia assimilation may enable diversion of fixed nitrogen to be exported from the cell as ammonia. The fixed ammonia is predominantly assimilated into glutamine by glutamine synthetase (GS), encoded by glnA, and subsequently into glutamine by glutamine oxoglutarate aminotransferase (GOGAT). In some examples, *glnS* encodes a glutamine synthetase. GS is regulated post-translationally by GS adenylyl transferase (GlnE), a bi-functional enzyme encoded by glnE that catalyzes both the adenylylation and de-adenylylation of GS through activity of its adenylyl-transferase (AT) and adenylyl-removing (AR) domains, respectively. Under nitrogen limiting conditions, glnA is expressed, and GlnE's AR domain de-adynylylates GS, allowing it to be active. Under conditions of nitrogen excess, glnA expression is turned off, and GlnE's AT domain is activated allosterically by glutamine, causing the adenylylation and deactivation of GS.

Furthermore, the *draT* gene may also be a target for genetic variation to facilitate field-based nitrogen fixation using the methods described herein. Once nitrogen fixing enzymes are produced by the cell, nitrogenase shut-off represents another level in which cell downregulates fixation activity in high nitrogen condition. This shut-off could be removed by decreasing the expression level of DraT.

Methods for imparting new microbial phenotypes can be performed at the transcriptional, translational, and post-translational levels. The transcriptional level includes changes at the promoter (such as changing sigma factor affinity or binding sites for transcription factors, including deletion of all or a portion of the promoter) or changing transcription terminators and attenuators. The translational level includes changes at the ribosome binding sites and changing mRNA degradation signals. The post-translational level includes mutating an enzyme's active site and changing protein-protein interactions. These changes can be achieved in a multitude of ways. Reduction of expression level (or complete abolishment) can be achieved by swapping the native ribosome binding site (RBS) or promoter with another with lower strength/efficiency. ATG start sites can be swapped to a GTG, TTG, or CTG start codon, which results in reduction in translational activity of the coding region. Complete abolishment of expression can be done by knocking out (deleting) the coding region of a gene. Frameshifting the open reading frame (ORF) likely will result in a premature stop codon along the ORF, thereby creating a non-functional truncated product. Insertion of in-frame stop codons will also similarly create a non-functional truncated product. Addition of a degradation tag at the N or C terminal can also be done to reduce the effective concentration of a particular gene.

Conversely, expression level of the genes described herein can be achieved by using a stronger promoter. To ensure high promoter activity during high nitrogen level condition (or any other condition), a transcription profile of the whole genome in a high nitrogen level condition could be obtained and active promoters with a desired transcription level can be chosen from that dataset to replace the weak promoter. Weak start codons can be swapped out with an ATG start codon for better translation initiation efficiency. Weak ribosomal binding sites (RBS) can also be swapped out with a different RBS with higher translation initiation efficiency. In addition, site-specific mutagenesis can also be performed to alter the activity of an enzyme.

Increasing the level of nitrogen fixation that occurs in a plant can lead to increased crop yields, a reduction in the amount of chemical fertilizer needed for crop production, and reduced greenhouse gas emissions (e.g., nitrous oxide). Prior to planting, seeds can be overtreated with microbials that have been engineered to perform nitrogen fixation. Plant growth from such seeds can be enhanced, particularly during early to mid-season stages of plant growth, by the overtreated microbials. Further still, other overtreatments can be applied prior to planting to enhance seed viability, and in a manner such that other coatings applied to seeds remain effective.

Conventional seed treatments applied to corn seed are typically applied upstream (for example, at a seed processing facility) using batch-style treaters prior to delivery of seed to a dealer or grower. Batch treaters are thought to be less abrasive to "flat" shaped seeds such as corn seed. Such treatments can include, for example, pesticides (fungicides, insecticides, nematicides), polymers, colorants, and for certain seeds, biological agents. Seed treatments applied to soybean seed are typically applied downstream (for example, at a grower's farm or at a facility located near the grower's farm using drum-style treaters. Drum treaters are used to treat crop seeds such as soybeans, which have relatively round seeds that are amenable to tumbling and relatively uniform application of coatings. In North America crop production area, conventional coatings may be applied in December, for example, prior to seed delivery in January and planting in April, as the components of the coatings are sufficiently stable to survive the intervening several months-long period.

Corn seeds benefit from application of an overtreatment coating that includes nitrogen-fixing microbials such as gram-negative, nitrogen-fixing bacteria. However, corn seeds are considerably "flatter" in shape than soybean seeds, and are therefore less amenable to tumbling to disperse an overtreatment coating composition. Further, overtreated microbials applied to corn seeds may not be sufficiently stable to withstand more than about 90 days of pre-planting storage, and may benefit from being applied as close to planting time as possible. As a result, an enhanced method for application of a microbial based overcoating to corn seed would include overcoating application using a non-tumbling style treater at a date closer to the location (farm) where the seed would be planted.

Particularly where both upstream and downstream treatments involve the application of biological agents, the agents may compete with one another for vitality. If one agent significantly outcompetes the other, the "losing" agent may be inactive when the seed is planted. One solution to this bio-compatibility problem is to apply one or both of the agents to the seed during an overcoating treatment shortly before planting, which reduces the time that the two agents compete with one another in the seed coating.

### Seed Treatments Systems

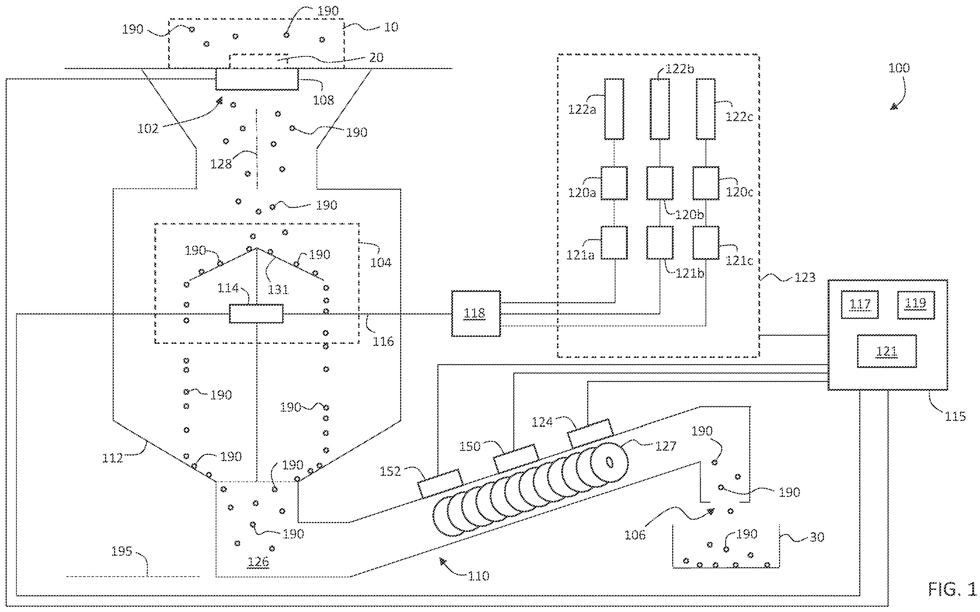

FIG. 1 is a schematic diagram of an example seed treatment system 100. System 100 includes an inlet 102, a treatment dispersal assembly 104, an outlet 106, a first transport mechanism 108, and a second transport mechanism 110.

During operation of system 100, seeds 190 stored in a seed box 10 leave the seed box through a box gate 20 and enter system 100 through inlet 102. For example, as shown in FIG. 1, the seed box 10 (storage container for seeds 190) can be mounted vertically atop system 100. Seeds 190 flow from the seed box 10 into inlet 102 through gate 20 by simply falling under the influence of gravitational force. The seeds 190 are transported by first transport mechanism 108 (which can be implemented, for example, as a seed flow metering gate) past treatment dispersal assembly 104, which applies an overtreatment to seeds 190 that includes at least one microbial. Following application of the overtreatment, the seeds are transported by second transport mechanism 110 to outlet 106, from which they are discharged, typically into a container such as seed box 30.

System 100 includes a fluid handling system 123. Fluid handling system 123 includes a mixer 118 (e.g., a static mixer), pumps 120a-c, flow meters 121a-c, and fluid reservoirs 122a-c. In FIG. 1, three pumps, flow meters, and fluid reservoirs are shown by way of illustration, but it should be appreciated that the system 100 can include any number of pumps, flow meters, and fluid reservoirs.

System 100 may include a control module 124 for second transport mechanism 110. Examples of suitable second transport mechanisms 110 and their associated control modules 124 are discussed further below.

System 100 includes a controller 115 that generally regulates operation of multiple components of the system during the application of the overtreatment to seeds 190. Controller 115 includes one or more electronic processors 121, one or more display devices 117, and one or more interfaces 119 through which an operator of system 100 can transmit instructions to system 100 to adjust or control various parameters, steps, and other aspects of system operation. Although a single controller 115 is shown in FIG. 1, it should be appreciated that the control operations described in connection with system 100 can be implemented by multiple controllers, and system 100 can include more than one controller 115, with each controller performing a subset of the operations described. However, for simplicity, the following discussion will refer to a single controller 115.

As shown in FIG. 1, controller 115 can be connected via one or more control lines to various components of system 100. For example, controller 115 is connected to first transport mechanism 108 to adjust the first transport mechanism, and to control module 124 of second transport mechanism 110 to adjust the second transport mechanism. Controller 115 is also connected to fluid handling system 123, and in particular, to mixer 118, to pump 120a-c, and to flow meter 121a-c, to regulate the delivery of fluid compositions to treatment dispersal assembly 104. Controller 115 is further connected to treatment dispersal assembly 104 to adjust the manner in which the overtreatment is applied to seeds 190, as described in further detail below.

Inlet 102 is typically implemented as an aperture in a housing 112 of system 100. Housing 112 can generally surround and contain any one or more of the components of system 100, and can be implemented in modular form as multiple housings secured together, or as a unitary housing. A variety of different materials are suitable for housing 112, including but not limited to metals such as steel and aluminum, and plastics.

As shown in FIG. 1, a portion of housing 112 is typically cone-shaped between inlet 102 and collection region 126 of system 100. The angled lateral surfaces of the cone-shaped region of housing 112 direct seeds 190, to which the overtreatment has been applied, into collection region 126, from which the overtreated seeds 190 are transported by a seed-transporting mechanism 127 (for example, an auger or conveyor) through the second transport mechanism 110 exiting the system 100 through the outlet 106.

First transport mechanism 108 may be implemented as a seed flow metering gate or other flow regulation device connected to, and regulated by, controller 115. As shown in FIG. 1, first transport mechanism 108 is located vertically above treatment dispersal assembly 104, relative to a ground surface 195 that supports system 100. Accordingly, when the seed flow metering device or other flow regulation device of first transport mechanism 108 is opened by controller 115, seeds 190 fall under the influence of gravity past treatment dispersal assembly 104 to the collection region 126 of system 100. Controller 115 can regulate the rate at which seeds 190 are introduced into system 100 by adjusting the cross-sectional area of the aperture in the seed flow metering gate or other flow regulation device of first transport mechanism 108.

Treatment dispersal assembly 104 may include an atomizer 114 connected to mixer 118 via a conduit 116. Atomizer 114 is also connected to controller 115 via a control line. During operation of system 100, one or more fluids from reservoirs 122a-c are pumped by pumps 120a-c through flow meters 121a-c and into mixer 118, where the fluids are mixed to form an overtreatment composition. The overtreatment composition is delivered from mixer 118 into atomizer 114 through conduit 116.

The volumes of fluids entering mixer 118 are regulated by controller 115, which adjusts flow meters 121a-c to adjust the rate at which fluids enter mixer 118 and are delivered to atomizer 114. Controller 115 may synchronize the flow rate of seeds 190 entering system 100 (by controlling first transport mechanism 108) and the amount of various fluids delivered from reservoirs 122a-c into atomizer 114 so that the amount of overtreatment that is applied to seeds 190 is carefully controlled and consistent. For example, system 100 can include a scale or other mass sensor (not shown in FIG. 1) connected to controller 115 that transmits information about the mass of seeds 190 in seed box 10 to controller 115. Using this mass information, controller 115 determines a rate at which seeds 190 enter system 100 from seed box 10 (i.e., by determining a loss-of-mass rate from seed box 10) and adjusts flow meters 121a-c to ensure that the amounts of fluids delivered to mixer 118 and atomizer 114 per unit time are precisely controlled for the rate at which seeds enter system 100. In this manner, appropriate volumes of fluids can be introduced into reservoirs 122a-c prior to initiating treatment of a box of seeds, and controller 115 automatically controls the rate at which the fluids are mixed and applied to the seeds so that the exact volumes of fluids introduced are dispersed evenly onto the seeds, with no waste of fluids and/or uneven seed overtreatment.

Atomizer 114 includes a plurality of apertures and typically rotates about an axis 128 that is parallel to a central axis of the cone-shaped portion of housing 112. Controller 115 can adjust the rate of rotation of atomizer 114, thereby regulating the rate at which the overtreatment composition is discharged from atomizer 114 and applied to seeds 190.

Treatment dispersal assembly 104 may include a seed dispersal member 131. Seed dispersal member 131 can generally be implemented in a variety of ways. Seed dispersal member 131 may be implemented as an inverted cone-shaped member positioned such that the outer surfaces of the member effectively guide falling seeds from inlet 102.

As shown in FIG. 1, during application of an overtreatment composition to seeds 190, the seeds 190 fall under gravity and are intercepted by seed dispersal member 131. The seed trajectories follow the surface contours of seed dispersal member 131, rolling or sliding along the angled surfaces until they reach the rim of the cone-shaped member 131, at which point the seeds 190 fall vertically downward again. The effect of seed dispersal member 131 is to create a cylindrical "sheet" or "curtain" of falling seed in the vicinity of atomizer 114 that is approximately one seed thick. Accordingly, when the overtreatment composition is discharged by atomizer 114, each falling seed is effectively coated with the composition. By ensuring that the "sheet" of falling seed is approximately one seed layer in thickness, system 100 ensures that the overtreatment composition is evenly dispersed with high uniformity onto each of the seeds.

Second transport mechanism 110 can generally be implemented in a variety of ways in system 100. As shown in FIG. 1, second transport mechanism 110 may include a seed transporting mechanism 127 (e.g., an auger or a belt conveyor system) through which seeds are transported from the collection area 126, and control module 124 includes an actuator (for example, a motor) that controls the rate at which the seed transporting mechanism 127 runs, and therefore, the rate at which overtreated seeds 190 are transported from collection region 126 to outlet 106. In turn, control module 124 is connected to controller 115 so that controller 115 can adjust the transport rate of seeds 190 to outlet 106 from collection region 126.

Second transport mechanism 110 may be implemented as a belt conveyor, and control module 124 may include (or be connected to) a motor or other actuator that controls the linear translation rate of the belt conveyor. As above, controller 115 - by virtue of its connection to control module 124 - can adjust the linear translation rate of the belt conveyor, and therefore the rate at which overtreated seeds 190 are transported from the collection region 126 to outlet 106.

Seeds 190 that are exposed to the overtreatment composition discharged by treatment dispersal assembly 104 typically arrive at collection region 126 "wet" - that is, with an overtreatment coating that has not fully dried. Ensuring that the overtreatment coating (and any other coatings applied by system 100) are dry before the seeds are discharged from outlet 106 into a storage container (e.g., seed box 30, and sometimes subsequently back into seed box 10) ensures that the overtreated seeds do not stick to one another, and do not experience moisture-based rot or decay during the period of time between overtreatment and planting. The overtreated seeds are dried during the course of their transport by the seed transporting mechanism 127 within the second transport mechanism 110. Accordingly, by adjusting the transport rate of overtreated seeds 190 between collection region 126 and outlet 106, controller 115 can adjust the drying time of the seeds in the second transport mechanism 110.

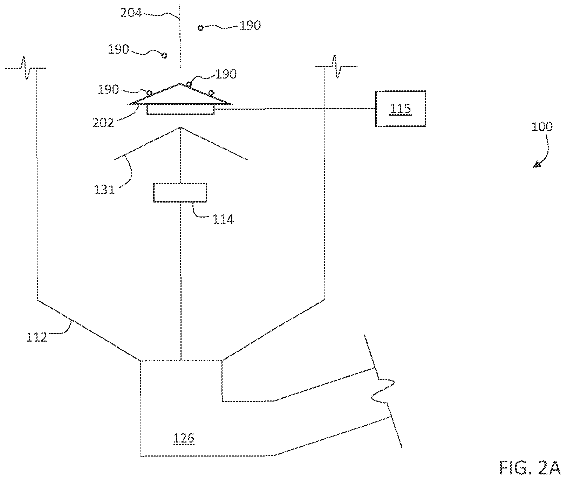

System 100 according to the invention includes a support member for seeds 190 within housing 112 and may assist the exposure of the seeds to the overtreatment composition discharged by the treatment dispersal assembly 104. The support member can optionally replace seed dispersal member 131 in FIG. 1, or can be present in addition to seed dispersal member 131. FIG. 2A is a schematic diagram showing a portion of an example of system 100. In addition to some of the components shown in FIG. 1, system 100 in FIG. 2A includes a support member 202 that supports seeds 190 after the seeds have fallen from inlet 102. Support member 202 can be implemented as a flat plate or a plate with inclined surfaces (e.g., a shallow cone), for example, that supports seeds 190.

Support member 202 optionally rotates about an axis 204 that is parallel to an axis of the cone-shaped portion of housing 112. Support member 202 is connected to controller 115, and controller 115 can adjust the rate at which support member 202 rotates. As support member 202 rotates, seeds 190 that land on the support member are transported radially outward from the center of support member 202 by centripetal acceleration, eventually falling from support member 202.

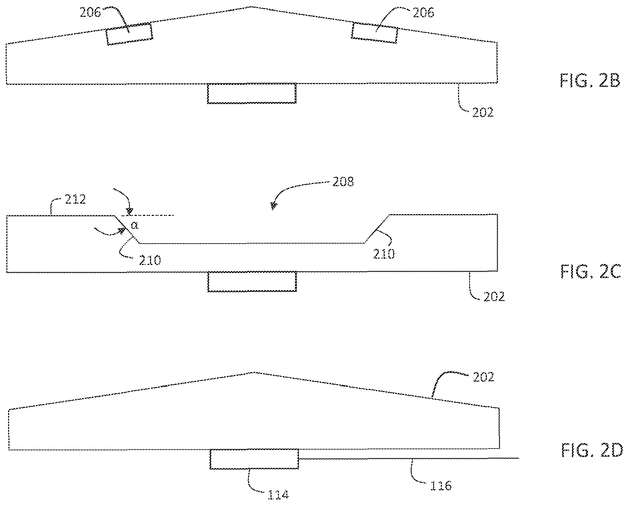

Support member 202 may be displaceable in the vertical direction in FIG. 2A, e.g., in a direction parallel to axis 204. Controller 115 can initiate displacement of support member 202 in the vertical direction by a controlled amount. Displacements of support member 202 under the control of controller 115 can occur periodically, alternating with stationary periods involving no vertical displacement. Alternatively, controller 115 can continuously displace support member 202 vertically (e.g., up and down in FIG. 2) during seed treatment.

Support member 202 includes one or more recesses or grooves into which seeds 190 fall after they are admitted into housing 112 by first transport mechanism 108. FIG. 2B is a schematic cross-sectional diagram of an example of support member 202 that includes one or more recesses 206. In general, recesses 206 can have axes that are oriented circumferentially, radially, or in any direction along the surface of support member 202. Further, support member 202 can generally have one or more (e.g., two or more, three or more, four or more, five or more, six or more, eight or more, ten or more, or even more) recesses. The recesses can have the same or different lengths, cross-sectional shapes, and cross-sectional dimensions.

One or more of the recesses may have lateral walls that are orthogonal with respect to the seed-supporting surface of support member 202 as shown in FIG. 2B. One or more of the recesses may have lateral walls that are inclined relative to the seed-supporting surface of support member 202. FIG. 2C is a schematic cross-sectional diagram of an example of a support member 202 that includes one or more recesses 208 with lateral walls that are inclined at an angle a with respect to the seed supporting surface 212 of support member 202. In general, angle a can be from 1 degree or more (e.g., 2 degrees or more, 5 degrees or more, 10 degrees or more, 15 degrees or more, 20 degrees or more, 25 degrees or more, 30 degrees or more, 35 degrees or more, 40 degrees or more, 45 degrees or more, 50 degrees or more, 55 degrees or more, 60 degrees or more, 65 degrees or more, 70 degrees or more, 75 degrees or more, 80 degrees or more, 85 degrees or more), or any range of angles between any two of the values of a described herein.

Although treatment dispersal assembly 104 (and specifically, atomizer 114) is a separate component from support member 202 in FIG. 2A, in some instances, the treatment dispersal assembly may be integrated into the support member. FIG. 2D is a schematic diagram showing a support member 202 into which atomizer 114 of treatment dispersal assembly 104 is integrated. Atomizer 114 in FIG. 2D generally functions in a manner similar to atomizer 114 in FIG. 1 described above. In FIG. 2D, support member 202 replaces seed dispersal member 131 shown in FIG. 1.

The support member 202 of system 100 may optionally be implemented as a scattering mechanism for dispersing seeds 190 as they fall from inlet 102. The scattering mechanism can replace seed dispersal member 131 shown in FIG. 1, or can be used together with seed dispersal member 131.

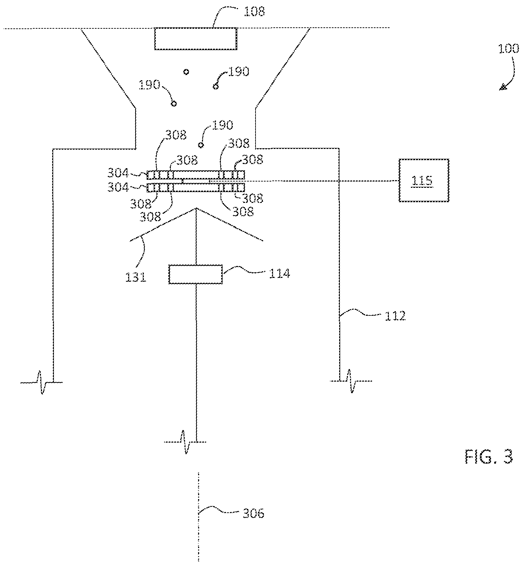

FIG. 3 is a schematic diagram of a portion of an example system 100 that includes a scattering mechanism 302 connected to controller 115. In FIG. 3, scattering mechanism 302 consists of two members 304 with a plurality of apertures 308 extending through each member. One or both of members 304 rotates about axis 306 under the control of controller 115, which adjusts the rate of rotation to control the rate at which seeds 190 pass through scattering mechanism 302. During operation, as seeds 190 are admitted by first transport mechanism 108 into housing 112, the seeds fall onto the top member 304. Seeds that are aligned with one of the apertures 308 in the top member fall onto the bottom member 304. In turn, seeds that are aligned with one of the apertures 308 in the bottom member pass through the bottom member and fall towards treatment dispersal assembly 104.

The arrangement and sizes of the apertures formed in members 304 can generally be selected to achieve a particular spatial distribution and throughput of seeds 190 falling past treatment dispersal assembly 104. A wide variety of different combinations of aperture positions and sizes in members 304 can be used. In some instances, for example, the number and/or cross-sectional area of apertures 308 increases in a radial direction outward from a center of one or both of the members 304 to disperse seeds 190 away from the central axis of the conical portion of housing 112.

As described above in connection with support member 202, one or both of members 304 can be displaced vertically in FIG. 3 by controller 115 to further disperse seeds 190 prior to overtreatment. Scattering mechanism 302 can include an actuator (not shown in FIG. 3) that is activatable by controller 115 to displace either of the members 304. Displacements can occur periodically or continuously, as described above.

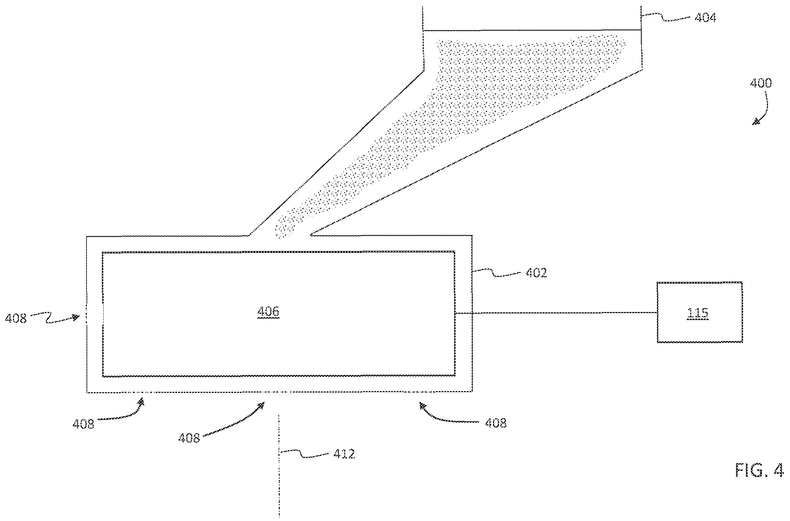

As described above, treatment dispersal assembly 104 may include an atomizer 114. However, treatment dispersal assembly 104 can also be implemented in other ways. For example, where the overtreatment composition is applied to seeds 190 as a dry powder or as granules, treatment dispersal assembly can include a powder scattering mechanism. FIG. 4 is a schematic diagram of an example powder scattering mechanism 400 that can be implemented in treatment dispersal assembly 104. Powder scattering mechanism 400 includes a reservoir 404 for dry powder or granules of the overtreatment composition, a scattering chamber 402, and a movable scattering element 406. A plurality of apertures 408 are formed in the walls of the scattering chamber 402. Controller 115 is connected to mechanism 400 and can adjust the rate of rotation of scattering element 406 about axis 412.

During operation, the dry power or granules is/are loaded into reservoir 404. Powder or granules fall into chamber 402, and scattering element 406, rotating about axis 412, scatters the powder or granules within chamber 402. The scattered powder or granules that emerge from chamber 402 through apertures 408 is/are applied to seeds 190 that fall through system 100, forming the overtreatment coating on the seeds.

Returning to FIG. 1, system 100 is shown with a single atomizer 114. More generally, however, system 100 can include more than one atomizer. In some instances, for example, system 100 can include two or more (e.g., three or more, four or more, five or more, six or more, or even more) atomizers, each connected to fluid handling system 123. A common fluid (for example, an overtreatment composition) can be delivered by the fluid handling system 123 to each atomizer. Alternatively, different fluids can be delivered to different atomizers of system 100.

Returning again to FIG. 1, the secondary transport mechanism may include additional components that assist the drying of seeds to which an overtreatment composition has been applied. For example, second transport mechanism 110 can optionally include a gas source 152 connected to controller 115. During operation of the system, controller 115 can regulate delivery of a dry gas (such as nitrogen) into second transport mechanism 110 to control the rate at which the applied overtreatment coating on seeds 190 dries.

Second transport mechanism 110 may optionally include an applicator 150 connected to controller 115 and configured to apply one or more drying agents to seeds to which an overtreatment composition has been applied. Suitable examples of such applicators include power and granule scattering mechanisms, as discussed above. Examples of drying agents that can be used for this purpose include, but are not limited to, talc and graphite. In general, drying agents can be used to shorten the drying time for treated seeds in second transport mechanism 110 and can also improve plantability of the seeds.

During transport of the overtreated seeds 190 by seed-transporting mechanism 127 within the second transport mechanism 110, the overtreatment composition is relatively fragile as it dries on seeds. Abrasion, mechanical disruption, and inactivation of biological components of the composition are possible. To reduce abrasion of the overtreatment adjustments and/or changes may be made to the seed-transporting mechanism 127, e.g., the seed transporting mechanism 127 may include a belt conveyor or auger system formed of a relatively soft, compliant, non-abrasive material. Examples of such materials include, but are not limited to, polymer materials, silicone materials, and rubber materials.

To gently tumble the overcoated seeds as they dry, second transport mechanism 110 may include a conveyor belt that follows an undulating or serpentine path. Successive "peaks" and "valleys" along the undulating conveyor path result in gentle tumbling of the seeds as they are transported.

### Treatment of Crop Seeds

Controller 115 can adjust and control various operating parameters of system 100 to apply a variety of overtreatment compositions to seeds 190 under many different conditions. In general, the conditions are selected to allow for adequate seed treatment rates, while at the same time ensuring that coatings applied upstream to the seeds are not compromised, and overtreatment compositions applied by system 100 remain viable up to the time at which the overtreated seeds are planted.

Controller 115 may adjust the first transport mechanism 108 so that seeds 190 are admitted into housing 112 at a rate of between 100 lbs./min. and 1000 lbs./min. (e.g., between 100 and 400 lbs./min., 500 lbs./min. and 900 lbs./min, between 600 lbs./min and 900 lbs./min, between 600 lbs./min. and 800 lbs./min, between 650 lbs./min. and 800 lbs./min, between 650 lbs./min. and 750 lbs./min.).

To ensure adequate dispersal of an overtreatment composition discharged by atomizer 114 onto seeds 190, controller 115 may adjust a rotation rate of atomizer 114 to a value between 1000 revolutions per minute (RPM) and 2500 RPM (e.g., between 1200 and 2300 RPM, between 1500 and 2000 RPM (e.g., between 1600 and 1700 RPM), between 1000 and 2000 RPM, between 1500 and 2500 RPM, and any range within these ranges).

Controller 115 may adjust a rotation rate of support member 202 to control the exposure time of seeds 190 to the overtreatment composition discharged by the treatment dispersal assembly. For example, the rotation rate of support member 202 can be between 100 RPM and 500 RPM (e.g., between 150 RPM and 450 RPM, between 200 RPM and 400 RPM, between 100 RPM and 400 RPM, between 200 RPM and 500 RPM, and any range within these ranges).

Controller 115 may adjust a supply rate of an overtreatment composition from mixer 118 to atomizer 114 to adjust the volume or concentration of overtreatment composition applied to seeds 190. In general, the supply rate selected can depend upon the type of seed being treated and the overtreatment composition that is applied to the seed. Supply rates for smaller seeds such as wheat and canola seeds having relatively high aggregate surface area may be relatively larger, while supply rates for larger seeds with smaller aggregate surface area may be relatively smaller.

Controller 115 may adjust the seed-transporting mechanism 127 thereby controlling the rate of the overcoated seeds through the second transport mechanism 110 to control a total drying time of the seeds following arrival of the seeds at the collection region 126 of system 100. For example, the transport rate can be adjusted so the total drying time for between 350 and 500 pounds of seed is between 20 s and 180 s (e.g., between 45 s and 150 s, between 60 s and 120 s, between 60 s and 90s, between 20 s and 45 s and any range within these ranges).

The dwell time refers to the elapsed interval between the time that the overcoating treatment is applied to seeds 190, and the time that the seeds are planted. In general, it can be advantageous to minimize the dwell time to ensure continued viability of microbials and other biological agents applied to seeds 190. In some instances, for example, the dwell time is 90 days or less (e.g., 80 days or less, 70 days or less, 60 days or less, 50 days or less, 40 days or less, 30 days or less, 20 days or less, 10 days or less, 5 days or less, 3 days or less, 2 days or less, 1 day or less). Seeds may be overcoated, dried, and planted on the same day.

In general, the overtreatment composition that is applied to seeds 190 is prepared by fluid handling system 123 and applied by the treatment dispersal assembly 104. Components of the composition can be combined into a single aqueous or non-aqueous solution and applied to seeds 190, or certain components can be applied separately from other components. Where certain components are applied separately, system 100 can include multiple atomizers 114 as described above, and fluid handling system 123 delivers the separate components to different atomizers. Alternatively, or in addition, fluid handling system 123 can deliver the separate components to one or more common atomizers at different times.

The overtreatment composition that is applied to the seeds generally includes at least one microbial. In some instances, for example, the at least one microbial includes at least one nitrogen-fixing microbe, such as a gram-negative nitrogen-fixing microbe. The at least one microbial may include at least one nitrogen-fixing bacterium. Examples of suitable bacteria include, but are not limited to, bacteria from strains 137-1036 (accession number 201712002), 137-2253 (accession number PTA-126740), 137-3890 (accession number PTA-126749), 6-5687 (accession number PTA-126743, previously described as 6-2122), and combinations of bacteria from these strains.

The overtreatment composition may include a polymer. Typically, the polymer encapsulates the other components of the composition around the seed, forming a protective coating for each treated seed to retain the treatment on the seed. In addition, polymers can assist in promoting flow of the seed through system 100 and within the seed box of a planting system, and in reducing dustoff associated with seed handling, thereby improving plantability.

The overtreatment composition may include a polymer precursor. Polymer precursors typically polymerize on the seed surface following deposition to form a polymer coating. Examples of suitable polymer precursors include, but are not limited to, monomers, dimers, trimers, and more generally, n-mers of any precursor to the polymers described above.

The overtreatment composition may include a protecting agent that assists in preserving the viability of one or more microbials that are contained in the composition. A variety of protecting agents can be included in the overtreatment compositions applied by system 100 including, but not limited to, pH modifiers, rheology modifiers, simple or complex sugars, sugar alcohols, polyvinylpyrrolidone (PVP), vinyl acetate (VA), copolymers of polyvinylpyrrolidone and vinyl acetate (designated generally as PVP-VA), polysorbate, propylene glycol, and glycerol.

In certain instances, as discussed above, the overtreatment composition is not a liquid composition. For example, the overtreatment composition can be a dry powder composition. Alternatively, the overtreatment composition can include granules that include one or more microbials. As discussed above, dry powder compositions and granule-based compositions can be applied to the seeds with a powder scattering mechanism. Alternatively, or in addition, dry powder compositions and granule-based compositions can be applied to seeds by applicator 150 in the second transport mechanism 110.

Where the overtreatment composition is a liquid composition, the viscosity of the composition may be adjusted to prevent run-off of the overtreatment composition from the surfaces of the seeds. For example, to restrict run-off, the viscosity of the overtreatment composition can be between 50 centiPoise (cP) and 250 cP (e.g., between 100 cP and 200 cP, between 150 cP and 250 cP, between 100 cP and 250 cP, between 50 cP and 200 cP, between 50 cP and 150 cP, and any range within these ranges).

### Microbial Stability, Seed Viability, and Upstream Coating Effectiveness

As discussed above, overtreatment compositions are applied by system 100 to ensure that the stability of the microbial(s) that is/are part of the compositions are maintained following application of the treatment, and the viability of the seeds is maintained following the application of the overtreatment composition.

Because the seeds that are treated by system 100 typically come from a seed processing facility, the seeds may already have been coated with an upstream coating. Upstream coatings commonly include components such as biocides (e.g., fungicides, insecticides, nematicides), and certain biological agents. The downstream overcoating compositions are applied to the already-treated seeds by system 100 in a manner ensuring that the effectiveness of the elements of the upstream coating is maintained following overtreatment.

### (a) Microbial Stability

To assess the stability of a microbial applied to a seed as part of an overtreatment composition, microbes are extracted from treated seeds using an extraction buffer followed by bacterial enumeration. Typically 25 seeds from specific formulation are put into sterile containers, in 3 biological replications, 250 mL of extraction buffer is added to the container and shaken for 30 min. to extract as much bacteria from the seed as possible. The extract is then assayed for bacterial enumeration using the standard plate method. The stability of microbes on the seed is calculated by monitoring the viability of microbial formulation on the seed over time at various temperatures.

Microbial viability right after overtreatment and over time at various temperature is a good measure of the ability of the overtreatment composition to protect the microbial during seed treatment, and is also a good indicator as to whether the seed overtreatment process or upstream treatment chemistry has any negative impact on the survival of the microbial on the seed.

### (b) Seed Viability

Seed viability is measured using both a warm germination test, and a cold germination test; both tests are conducted in a laboratory. The warm germination test provides an estimate of seed viability when seeds are germinated under warm temperatures, which are considered ideal for seed germination. The cold germination test provides an estimate of seed viability when seeds are germinated under cold temperatures, which is considered stressful for seed germination.

To conduct the warm germination test, seeds are placed in a moist brown paper towel, in a lab growth chamber at a temperature of 25 °C. The seeds are then allowed to imbibe water, germinate, and grow for a period of 7 days, after which the number of germinated seeds are counted providing the percentage of seeds that have germinated under ideal conditions.

To conduct the cold germination test, seeds are placed in a moist brown paper towel at 10 °C temperature for a 7-day period. Then the seeds are placed in a growth chamber at a temperature of 25 °C for an additional 7 days. At the end of this 7-day period, the number of germinated seeds is counted providing the percentage of seeds that have germinated under stressful conditions. Seed viability is a good measure of the impact of the seed-germination response to seed overtreatments when grown under favorable or stressful conditions.

### (c) Effectiveness of Upstream Coating Elements

As discussed above, elements of the upstream coating applied to seeds typically include fungicides, insecticides, nematicides, polymer and color coatings. To determine if overtreatments impact the underlying upstream seed treatments efficacy, seeds with only the upstream coating and seeds with both upstream coatings and overtreatments are compared in laboratory, greenhouse, and field trials against selected plant pathogens. The efficacy of upstream-applied insecticides against selected insects and pests by comparing responses between seeds of the two groups. Upstream seed treatments and overtreatments are considered compatible if the efficacy of the underlying upstream seed treatment is not negatively impacted when an overtreatment is applied.

### Agricultural Compositions

Seeds that are treated with one or more overtreatment compositions using the methods and systems described herein can be used in and/or form agricultural compositions that are used for growing food and other crops. As such, plant seeds of the agricultural compositions can be viable to grow into plants.

The agricultural compositions typically include one or more plant seeds that include a first coating and an overtreatment. The overtreatment generally includes at least one microbial.

A variety of different plant seeds can be used in the composition including, but not limited to, corn seeds. The first coating can include various components such as, but not limited to, one or more biocides. As such, the first coating can have biocidal activity.

As discussed above, the overtreatment can also include various components, examples of which include, but are not limited to, polymers and additional microbials. Microbials that can be used in the overtreatment as part of the agricultural compositions can include nitrogen fixing microbes such as nitrogen-fixing bacteria and/or gram-negative microbes such as gram-negative nitrogen fixing microbes. Examples of such nitrogen-fixing bacteria include, but are not limited to, strains 137-1036, 137-2253, 137-3890, 6-5687, and any combination thereof. In some agricultural compositions, one or more microbials present in the overtreatment provide fixed nitrogen to a plant grown from the plant seed on which the overtreatment is applied.

### Bacterial Species

Microbes useful in the methods and compositions disclosed herein may be obtained from any source. In some cases, microbes may be bacteria, archaea, protozoa or fungi. The microbes of this disclosure may be nitrogen fixing microbes, for example a nitrogen fixing bacteria, nitrogen fixing archaea, nitrogen fixing fungi, nitrogen fixing yeast, or nitrogen fixing protozoa. Microbes useful in the methods and compositions disclosed herein may be spore forming microbes, for example spore forming bacteria. In some cases, bacteria useful in the methods and compositions disclosed herein may be Gram positive bacteria or Gram- negative bacteria. In some cases, the bacteria may be an endospore forming bacteria of the Firmicute phylum. In some cases, the bacteria may be a diazotroph. In some cases, the bacteria may not be a diazotroph.

Nitrogen fixing microbes that can be used in the methods and compositions disclosed herein can be genetically engineered microbes, mutagenized microbes, and combinations of genetically engineered and mutagenized microbes. Examples of genetically engineered, nitrogen fixing microbes and methods for the production of such microbes are described in PCT Patent Application Publication No. WO 2021/222567. Examples of mutagenized, nitrogen fixing microbes and methods for the production of such microbes are described in PCT Patent Application Publication No. WO 2020/219893.

The methods and compositions of this disclosure may be used with an archaea, such as, for example, *Methanothermobacter thermoautotrophicus.*

In some cases, bacteria which may be useful include, but are not limited to, *Agrobacterium radiobacter, Bacillus acidocaldarius, Bacillus acidoterrestris, Bacillus agri, Bacillus aizawai, Bacillus albolactis, Bacillus alcalophilus, Bacillus alvei, Bacillus aminoglucosidicus, Bacillus aminovorans, Bacillus amylolyticus* (also known as *Paenibacillus amylolyticus*) *Bacillus amyloliquefaciens, Bacillus aneurinolyticus, Bacillus atrophaeus, Bacillus azotoformans, Bacillus badius, Bacillus cereus* (synonyms: *Bacillus endorhythmos, Bacillus medusa*), *Bacillus chitinosporus, Bacillus circulans, Bacillus coagulans, Bacillus endoparasiticus Bacillus fastidiosus, Bacillus firmus, Bacillus kurstaki, Bacillus lacticola, Bacillus lactimorbus, Bacillus lactis, Bacillus laterosporus* (also known as *Brevibacillus laterosporus*)*, Bacillus lautus, Bacillus lentimorbus, Bacillus lentus, Bacillus licheniformis, Bacillus maroccanus, Bacillus megaterium, Bacillus metiens, Bacillus mycoides, Bacillus natto, Bacillus nematocida, Bacillus nigrificans, Bacillus nigrum, Bacillus pantothenticus, Bacillus popillae, Bacillus psychrosaccharolyticus, Bacillus pumilus, Bacillus siamensis, Bacillus smithii, Bacillus sphaericus, Bacillus subtilis, Bacillus thuringiensis, Bacillus uniflagellatus, Bradyrhizobium japonicum, Brevibacillus brevis Brevibacillus laterosporus* (formerly *Bacillus laterosporus*), *Chromobacterium subtsugae, Delftia acidovorans, Lactobacillus acidophilus, Lysobacter antibioticus, Lysobacter enzymogenes, Paenibacillus alvei, Paenibacillus polymyxa, Paenibacillus popilliae* (formerly *Bacillus popilliae), Pantoea agglomerans, Pasteuria penetrans* (formerly *Bacillus penetrans), Pasteuria usgae, Pectobacterium carotovorum* (formerly *Erwinia carotovora*), *Pseudomonas aeruginosa, Pseudomonas aureofaciens, Pseudomonas cepacia* (formerly known as *Burkholderia cepacia), Pseudomonas chlororaphis, Pseudomonas fluorescens, Pseudomonas proradix, Pseudomonas putida, Pseudomonas syringae, Serratia entomophila, Serratia marcescens, Streptomyces colombiensis, Streptomyces galbus, Streptomyces goshikiensis, Streptomyces griseoviridis, Streptomyces lavendulae, Streptomyces prasinus, Streptomyces saraceticus, Streptomyces venezuelae, Xanthomonas campestris, Xenorhabdus luminescens, Xenorhabdus nematophila, Rhodococcus globerulus* AQ719 (NRRL Accession No. B-21663), *Bacillus* sp. AQ175 (ATCC Accession No. 55608), *Bacillus* sp. AQ 177 (ATCC Accession No. 55609), *Bacillus* sp. AQ178 (ATCC Accession No. 53522), and *Streptomyces* sp. strain NRRL Accession No. B-30145. In some cases the bacterium may be *Azotobacter chroococcum, Methanosarcina barkeri, Klesiella pneumoniae, Azotobacter vinelandii, Rhodobacter spharoides, Rhodobacter capsulatus, Rhodobcter palustris, Rhodosporillum rubrum, Rhizobium leguminosarum or Rhizobium etli.*

In some cases the bacterium may be a species of *Clostridium,* for example *Clostridium pasteurianum, Clostridium beijerinckii, Clostridium perfringens, Clostridium tetani, Clostridium acetobutylicum.*

In some cases, bacteria used with the methods and compositions of the present disclosure may be cyanobacteria. Examples of cyanobacterial genuses include *Anabaena* (for example *Anagaena* sp. PCC7120), *Nostoc* (for example *Nostoc punctiforme),* or *Synechocystis* (for example *Synechocystis* sp. PCC6803).

In some cases, bacteria used with the methods and compositions of the present disclosure may belong to the phylum Chlorobi, for example *Chlorobium tepidum.*

In some cases, microbes used with the methods and compositions of the present disclosure may comprise a gene homologous to a known NifH gene. Sequences of known NifH genes may be found in, for example, the Zehr lab NifH database, (wwwzehr.pmc.ucsc.edu/nifH_Database_Public/, April 4, 2014), or the Buckley lab NifH database (www.css.cornell.edu/faculty/buckley/nifh.htm, and Gaby, John Christian, and Daniel H. Buckley. "A comprehensive aligned nifH gene database: a multipurpose tool for studies of nitrogen-fixing bacteria." Database 2014 (2014): bau001.). In some cases, microbes used with the methods and compositions of the present disclosure may comprise a sequence which encodes a polypeptide with at least 60%, 70%, 80%, 85%, 90%, 95%, 96%, 96%, 98%, 99% or more than 99% sequence identity to a sequence from the Zehr lab NifH database, (wwwzehr.pmc.ucsc.edu/nifH_Database_Public/, April 4, 2014). In some cases, microbes used with the methods and compositions of the present disclosure may comprise a sequence which encodes a polypeptide with at least 60%, 70%, 80%, 85%, 90%, 95%, 96%, 96%, 98%, 99% or more than 99% sequence identity to a sequence from the Buckley lab NifH database, (Gaby, John Christian, and Daniel H. Buckley. "A comprehensive aligned nifH gene database: a multipurpose tool for studies of nitrogen-fixing bacteria." Database 2014 (2014): bau001.).

Microbes useful in the methods and compositions disclosed herein can be obtained by extracting microbes from surfaces or tissues of native plants; grinding seeds to isolate microbes; planting seeds in diverse soil samples and recovering microbes from tissues; or inoculating plants with exogenous microbes and determining which microbes appear in plant tissues. Nonlimiting examples of plant tissues include a seed, seedling, leaf, cutting, plant, bulb, tuber, root, and rhizomes. In some cases, bacteria are isolated from a seed. The parameters for processing samples may be varied to isolate different types of associative microbes, such as rhizospheric, epiphytes, or endophytes. Bacteria may also be sourced from a repository, such as environmental strain collections, instead of initially isolating from a first plant. The microbes can be genotyped and phenotyped, via sequencing the genomes of isolated microbes; profiling the composition of communities *in planta;* characterizing the transcriptomic functionality of communities or isolated microbes; or screening microbial features using selective or phenotypic media (e.g., nitrogen fixation or phosphate solubilization phenotypes). Selected candidate strains or populations can be obtained via sequence data; phenotype data; plant data (e.g., genome, phenotype, and/or yield data); soil data (e.g., pH, N/P/K content, and/or bulk soil biotic communities); or any combination of these.

The bacteria and methods of producing bacteria described herein may apply to bacteria able to self-propagate efficiently on the leaf surface, root surface, or inside plant tissues without inducing a damaging plant defense reaction, or bacteria that are resistant to plant defense responses. The bacteria described herein may be isolated by culturing a plant tissue extract or leaf surface wash in a medium with no added nitrogen. However, the bacteria may be unculturable, that is, not known to be culturable or difficult to culture using standard methods known in the art. The bacteria described herein may be an endophyte or an epiphyte or a bacterium inhabiting the plant rhizosphere (rhizospheric bacteria). The bacteria obtained after repeating the steps of introducing genetic variation, exposure to a plurality of plants, and isolating bacteria from plants with an improved trait one or more times (e.g. 1, 2, 3, 4, 5, 10, 15, 25, or more times) may be endophytic, epiphytic, or rhizospheric. Endophytes are organisms that enter the interior of plants without causing disease symptoms or eliciting the formation of symbiotic structures, and are of agronomic interest because they can enhance plant growth and improve the nutrition of plants (e.g., through nitrogen fixation). The bacteria can be a seed-borne endophyte. Seed-borne endophytes include bacteria associated with or derived from the seed of a grass or plant, such as a seed-borne bacterial endophyte found in mature, dry, undamaged (e.g., no cracks, visible fungal infection, or prematurely germinated) seeds. The seed-borne bacterial endophyte can be associated with or derived from the surface of the seed; alternatively, or in addition, it can be associated with or derived from the interior seed compartment (e.g., of a surface-sterilized seed). In some cases, a seed-borne bacterial endophyte is capable of replicating within the plant tissue, for example, the interior of the seed. Also, in some cases, the seed-borne bacterial endophyte is capable of surviving desiccation.

The bacteria isolated according to methods of the disclosure, or used in methods or compositions of the disclosure, can comprise a plurality of different bacterial taxa in combination. By way of example, the bacteria may include Proteobacteria (such as *Pseudomonas, Enterobacter, Stenotrophomonas, Burkholderia, Rhizobium, Herbaspirillum, Pantoea, Serratia, Rahnella, Azospirillum, Azorhizobium, Azotobacter, Duganella, Delftia, Bradyrhizobiun, Sinorhizobium* and *Halomonas),* Firmicutes (such as *Bacillus, Paenibacillus, Lactobacillus, Mycoplasma, and Acetabacterium),* and Actinobacteria (such as *Streptomyces, Rhodacoccus, Microbacterium,* and *Curtobacterium).* The bacteria used in methods and compositions of this disclosure may include nitrogen fixing bacterial consortia of two or more species. In some cases, one or more bacterial species of the bacterial consortia may be capable of fixing nitrogen. In some cases, one or more species of the bacterial consortia may facilitate or enhance the ability of other bacteria to fix nitrogen. The bacteria which fix nitrogen and the bacteria which enhance the ability of other bacteria to fix nitrogen may be the same or different. In some examples, a bacterial strain may be able to fix nitrogen when in combination with a different bacterial strain, or in a certain bacterial consortia, but may be unable to fix nitrogen in a monoculture. Examples of bacterial genuses which may be found in a nitrogen fixing bacterial consortia include, but are not limited to, *Herbaspirillum, Azospirillum, Enterobacter,* and *Bacillus.*

Bacteria that can be produced by the methods disclosed herein include *Azotobacter* sp., *Bradyrhizobium* sp., *Klebsiella* sp., and *Sinorhizobium* sp. In some cases, the bacteria may be selected from the group consisting of: *Azotobacter vinelandii, Bradyrhizobium japonicum, Klebsiella pneumoniae,* and *Sinorhizobium meliloti.* In some cases, the bacteria may be of the genus *Enterobacter* or *Rahnella.* In some cases, the bacteria may be of the genus *Frankia, or Clostridium.* Examples of bacteria of the genus Clostridium include, but are not limited to, *Clostridium acetobutilicum, Clostridium pasteurianum, Clostridium beijerinckii, Clostridium perfringens,* and *Clostridium tetani.* In some cases, the bacteria may be of the genus *Paenibacillus,* for example *Paenibacillus azotofixans, Paenibacillus borealis, Paenibacillus durus, Paenibacillus macerans, Paenibacillus polymyxa, Paenibacillus alvei, Paenibacillus amylolyticus, Paenibacillus campinasensis, Paenibacillus chibensis, Paenibacillus glucanolyticus, Paenibacillus illinoisensis, Paenibacillus larvae* subsp. *Larvae, Paenibacillus larvae* subsp. *Pulvifaciens, Paenibacillus lautus, Paenibacillus macerans, Paenibacillus macquariensis, Paenibacillus macquariensis, Paenibacillus pabuli, Paenibacillus peoriae,* or *Paenibacillus polymyxa.*

In some examples, bacteria isolated according to methods of the disclosure can be a member of one or more of the following taxa: *Achromobacter, Acidithiobacillus, Acidovorax, Acidovoraz, Acinetobacter, Actinoplanes, Adlercreutzia, Aerococcus, Aeromonas, Afipia, Agromyces, Ancylobacter, Arthrobacter, Atopostipes, Azospirillum, Bacillus, Bdellovibrio, Beijerinckia, Bosea, Bradyrhizobium, Brevibacillus, Brevundimonas, Burkholderia, Candidatus Haloredivivus, Caulobacter, Cellulomonas, Cellvibrio, Chryseobacterium, Citrobacter, Clostridium, Coraliomargarita, Corynebacterium, Cupriavidus, Curtobacterium, Curvibacter, Deinococcus, Delftia, Desemzia, Devosia, Dokdonella, Dyella, Enhydrobacter, Enterobacter, Enterococcus, Erwinia, Escherichia, Escherichia*/*Shigella, Exiguobacterium, Ferroglobus, Filimonas, Finegoldia, Flavisolibacter, Flavobacterium, Frigoribacterium, Gluconacetobacter, Hafnia, Halobaculum, Halomonas, Halosimplex, Herbaspirillum, Hymenobacter, Klebsiella, Kocuria, Kosakonia, Lactobacillus, Leclercia, Lentzea, Luteibacter, Luteimonas, Massilia, Mesorhizobium, Methylobacterium, Microbacterium, Micrococcus, Microvirga, Mycobacterium, Neisseria, Nocardia, Oceanibaculum, Ochrobactrum, Okibacterium, Oligotropha, Oryzihumus, Oxalophagus, Paenibacillus, Panteoa, Pantoea, Pelomonas, Perlucidibaca, Plantibacter, Polynucleobacter, Propionibacterium, Propioniciclava, Pseudoclavibacter, Pseudomonas, Pseudonocardia, Pseudoxanthomonas, Psychrobacter, Rahnella, Ralstonia, Rheinheimera, Rhizobium, Rhodococcus, Rhodopseudomonas, Roseateles, Ruminococcus, Sebaldella, Sediminibacillus, Sediminibacterium, Serratia, Shigella, Shinella, Sinorhizobium, Sinosporangium, Sphingobacterium, Sphingomonas, Sphingopyxis, Sphingosinicella, Staphylococcus, 25 Stenotrophomonas, Strenotrophomonas, Streptococcus, Streptomyces, Stygiolobus, Sulfurisphaera, Tatumella, Tepidimonas, Thermomonas, Thiobacillus, Variovorax, WPS-2 genera incertae sedis, Xanthomonas,* and *Zimmermannella.*

**In** some cases, a bacterial species selected from at least one of the following genera are utilized: *Enterobacter, Klebsiella, Kosakonia,* and *Rahnella.* **In** some cases, a combination of bacterial species from the following genera are utilized: *Enterobacter, Klebsiella, Kosakonia,* and *Rahnella.* **In** some cases, the species utilized can be one or more of: *Enterobacter sacchari, Klebsiella variicola, Kosakonia sacchari, and Rahnella aquatilis.*

**In** some cases, a Gram positive microbe may have a Molybdenum-Iron nitrogenase system comprising: *nifH, nifD, nifK, nifB, nifE, nifN, nifX, hesA, nifV, nifW, nifU, nifS, nifI1, and nifI2. In some cases,* a Gram positive *microbe may have a* vanadium nitrogenase system comprising: *vnfDG, vnfK, vnfE, vnfN, vupC, vupB, vupA, vafV, vnfR1, vafH, vafR2, vnfA* (transcriptional regulator). **In** some cases, a Gram positive microbe may have an iron-only nitrogenase system comprising: *anfK, anfG, anfD, anfH, anfA* (transcriptional regulator). **In** some cases, a Gram positive microbe may have a nitrogenase system comprising *glnB,* and *glnK* (nitrogen signaling proteins). Some examples of enzymes involved in nitrogen metabolism in Gram positive microbes include *glnA* (glutamine synthetase), *gdh* (glutamate dehydrogenase), *bdh* (3-hydroxybutyrate dehydrogenase), glutaminase, *gltAB*/*gltB*/*gltS* (glutamate synthase), *asnA*/*asnB* (aspartate- ammonia ligase/asparagine synthetase), and *ansA*/*ansZ* (asparaginase).

Some examples of proteins involved in nitrogen transport in Gram positive microbes include *amtB* (ammonium transporter), *glnK* (regulator of ammonium transport), *glnPHQ*/ *glnQHMP* (ATPdependent glutamine/glutamate transporters), *glnT*/*alsT*/*yrbD*/*yflA* (glutamine-like proton symport transporters), and *gltP gltT*/*yhcl*/*nqt* (glutamate-like proton symport transporters).

Examples of Gram positive microbes which may be of particular interest include *Paenibacillus polymixa, Paenibacillus riograndensis, Paenibacillus sp., Frankia sp., Heliobacterium sp., Heliobacterium chlorum, Heliobacillus sp., Heliophilum sp., Heliorestis sp., Clostridium acetobutylicum, Clostridium sp., Mycobacterium flaum, Mycobacterium sp., Arthrobacter sp., Agromyces sp., Corynebacterium autitrophicum, Corynebacterium sp., Micromonspora sp., Propionibacteria sp., Streptomyces sp.,* and *Microbacterium sp..*

Some examples of genetic alterations which may be made in Gram positive microbes include: deleting *glnR* to remove negative regulation of BNF in the presence of environmental nitrogen, inserting different promoters directly upstream of the *nif* cluster to eliminate regulation by GlnR in response to environmental nitrogen, mutating *glnA* to reduce the rate of ammonium assimilation by the GS-GOGAT pathway, deleting *amtB* to reduce uptake of ammonium from the media, mutating *glnA* so it is constitutively in the feedback-inhibited (FBI-GS) state, to reduce ammonium assimilation by the GS-GOGAT pathway.

In some cases, glnR is the main regulator of N metabolism and fixation in *Paenibacillus* species. In some cases, the genome of a *Paenibacillus* species may not contain a gene to produce glnR. In some cases, the genome of a *Paenibacillus* species may not contain a gene to produce glnE or glnD. In some cases, the genome of a *Paenibacillus* species may contain a gene to produce *glnB* or *glnK.* For example, Paenibacillus sp. WLY78 doesn't contain a gene for glnB, or its homologs found in the archaeon Methanococcus maripaludis, nifI1 and nifI2. In some cases, the genomes of *Paenibacillus* species may be variable. For example, *Paenibacillus polymixa* E681 lacks *glnK* and *gdh,* has several nitrogen compound transporters, but only *amtB* appears to be controlled by GlnR. In another example, *Paenibacillus* sp. JDR2 has *glnK, gdh* and most other central nitrogen metabolism genes, has many fewer nitrogen compound transporters, but does have *glnPHQ* controlled by GlnR. *Paenibacillus riograndensis* SBR5 contains a standard *glnRA* operon, an *fdx* gene, a main *nif* operon, a secondary *nif* operon, and an *anf* operon (encoding irononly nitrogenase). Putative glnR/tnrA sites were found upstream of each of these operons. GlnR may regulate all of the above operons, except the *anf* operon. GlnR may bind to each of these regulatory sequences as a dimer.

*Paenibacillus* N-fixing strains may fall into two subgroups: Subgroup I, which contains only a minimal *nif* gene cluster and subgroup II, which contains a minimal cluster, plus an uncharacterized gene between *nifX and hesA,* and often other clusters duplicating some of the *nif* genes, such as *nifH, nifHDK, nifBEN, or* clusters encoding vanadaium nitrogenase *(vnf)* or irononly nitrogenase *(anf)* genes.

In some cases, the genome of a *Paenibacillus* species may not contain a gene to produce *glnB* or *glnK.* In some cases, the genome of a *Paenibacillus* species may contain a minimal nif cluster with 9 genes transcribed from a sigma-70 promoter. In some cases, a *Paenibacillus* nif cluster may be negatively regulated by nitrogen or oxygen. In some cases, the genome of a *Paenibacillus* species may not contain a gene to produce *sigma-54.* For example, Paenibacillus sp. WLY78 does not contain a gene for sigma-54. In some cases, a nif cluster may be regulated by glnR, and/or TnrA. In some cases, activity of a nif cluster may be altered by altering activity of glnR, and/or TnrA.

In Bacilli, glutamine synthetase (GS) is feedback-inhibited by high concentrations of intracellular glutamine, causing a shift in confirmation (referred to as FBI-GS). Nif clusters contain distinct binding sites for the regulators GlnR and TnrA in several Bacilli species. GlnR binds and represses gene expression in the presence of excess intracellular glutamine and AMP. A role of GlnR may be to prevent the influx and intracellular production of glutamine and ammonium under conditions of high nitrogen availability. TnrA may bind and/or activate (or repress) gene expression in the presence of limiting intracellular glutamine, and/or in the presence of FBI-GS. In some cases, the activity of a Bacilli nif cluster may be altered by altering the activity of GlnR.

Feedback-inhibited glutamine synthetase (FBI-GS) may bind GlnR and stabilize binding of GlnR to recognition sequences. Several bacterial species have a GlnR/TnrA binding site upstream of the *nif* cluster. Altering the binding of FBI-GS and GlnR may alter the activity of the nif pathway.

### Sources of Microbes

The bacteria (or any microbe according to the disclosure) may be obtained from any general terrestrial environment, including its soils, plants, fungi, animals (including invertebrates) and other biota, including the sediments, water and biota of lakes and rivers; from the marine environment, its biota and sediments (for example, sea water, marine muds, marine plants, marine invertebrates (for example, sponges), marine vertebrates (for example, fish)); the terrestrial and marine geosphere (regolith and rock, for example, crushed subterranean rocks, sand and clays); the cryosphere and its meltwater; the atmosphere (for example, filtered aerial dusts, cloud and rain droplets); urban, industrial and other man-made environments (for example, accumulated organic and mineral matter on concrete, roadside gutters, roof surfaces, and road surfaces).

The plants from which the bacteria (or any microbe according to the disclosure) are obtained may be a plant having one or more desirable traits, for example a plant which naturally grows in a particular environment or under certain conditions of interest. By way of example, a certain plant may naturally grow in sandy soil or sand of high salinity, or under extreme temperatures, or with little water, or it may be resistant to certain pests or disease present in the environment, and it may be desirable for a commercial crop to be grown in such conditions, particularly if they are, for example, the only conditions available in a particular geographic location. By way of further example, the bacteria may be collected from commercial crops grown in such environments, or more specifically from individual crop plants best displaying a trait of interest amongst a crop grown in any specific environment: for example the fastest- growing plants amongst a crop grown in saline-limiting soils, or the least damaged plants in crops exposed to severe insect damage or disease epidemic, or plants having desired quantities of certain metabolites and other compounds, including fiber content, oil content, and the like, or plants displaying desirable colors, taste or smell. The bacteria may be collected from a plant of interest or any material occurring in the environment of interest, including fungi and other animal and plant biota, soil, water, sediments, and other elements of the environment as referred to previously.

The bacteria (or any microbe according to the disclosure) may be isolated from plant tissue. This isolation can occur from any appropriate tissue in the plant, including for example root, stem and leaves, and plant reproductive tissues. By way of example, conventional methods for isolation from plants typically include the sterile excision of the plant material of interest (e.g., root or stem lengths, leaves), surface sterilization with an appropriate solution (e.g. 2% sodium hypochlorite), after which the plant material is placed on nutrient medium for microbial growth.

Alternatively, the surface-sterilized plant material can be crushed in a sterile liquid (usually water) and the liquid suspension, including small pieces of the crushed plant material spread over the surface of a suitable solid agar medium, or media, which may or may not be selective (e.g. contain only phytic acid as a source of phosphorus). This approach is especially useful for bacteria which form isolated colonies and can be picked off individually to separate plates of nutrient medium, and further purified to a single species by well-known methods. Alternatively, the plant root or foliage samples may not be surface sterilized but only washed gently thus including surface dwelling epiphytic microorganisms in the isolation process, or the epiphytic microbes can be isolated separately, by imprinting and lifting off pieces of plant roots, stem or leaves onto the surface of an agar medium and then isolating individual colonies as above. This approach is especially useful for bacteria, for example. Alternatively, the roots may be processed without washing off small quantities of soil attached to the roots, thus including microbes that colonize the plant rhizosphere. Otherwise, soil adhering to the roots can be removed, diluted and spread out onto agar of suitable selective and non-selective media to isolate individual colonies of rhizospheric bacteria.

### Overtreatment Compositions

Examples of overtreatment and upstream compositions may include seed coatings for commercially important agricultural crops, for example, sorghum, canola, tomato, strawberry, barley, rice, maize, and wheat. Examples of compositions can also include seed coatings for corn, soybean, canola, sorghum, potato, rice, vegetables, cereals, and oilseeds. Seeds as provided herein can be genetically modified organisms (GMO), non-GMO, gene edited, organic, or conventional. The bacterial species may be present in compositions at a concentration of between 10⁸ to 10¹⁰ CFU/mL. In some examples, compositions may be supplemented with trace metal ions, such as molybdenum ions, iron ions, manganese ions, or combinations of these ions. The concentration of ions in examples of compositions as described herein may between about 0.1 mM and about 50 mM. Some examples of compositions may also be formulated with a carrier, such as beta-glucan, carboxylmethyl cellulose (CMC), bacterial extracellular polymeric substance (EPS), sugar, animal milk, or other suitable carriers. In some examples, peat or planting materials can be used as a carrier, or biopolymers in which a composition is entrapped in the biopolymer can be used as a carrier. The compositions comprising the bacterial populations described herein can improve plant traits, such as promoting plant growth, maintaining high chlorophyll content in leaves, increasing fruit or seed numbers, and increasing fruit or seed unit weight.

The compositions can include a tackifier or adherent (referred to as an adhesive agent) to help bind other active agents to a substance (e.g., a surface of a seed). Such agents are useful for combining bacteria with carriers that can contain other compounds (e.g., control agents that are not biologic), to yield a coating composition. Such compositions help create coatings around the plant or seed to maintain contact between the microbe and other agents with the plant or plant part. Adhesives may be selected from the group consisting of: alginate, gums, starches, lecithins, formononetin, polyvinyl alcohol, alkali formononetinate, hesperetin, polyvinyl acetate, cephalins, Gum Arabic, Xanthan Gum, Mineral Oil, Polyethylene Glycol (PEG), Polyvinyl pyrrolidone (PVP), Arabinogalactan, Methyl Cellulose, PEG 400, Chitosan, Polyacrylamide, Polyacrylate, Polyacrylonitrile, Glycerol, Triethylene glycol, Vinyl Acetate, Gellan Gum, Polystyrene, Polyvinyl, Carboxymethyl cellulose, Gum Ghatti, and polyoxyethylene-polyoxybutylene block copolymers.

The adhesives may be, e.g. a wax such as carnauba wax, beeswax, Chinese wax, shellac wax, spermaceti wax, candelilla wax, castor wax, ouricury wax, and rice bran wax, a polysaccharide (e.g., starch, dextrins, maltodextrins, alginate, and chitosans), a fat, oil, a protein (e.g., gelatin and zeins), gum arables, and shellacs. Adhesive agents can be non-naturally occurring compounds, e.g., polymers, copolymers, and waxes. For example, non-limiting examples of polymers that can be used as an adhesive agent include: polyvinyl acetates, polyvinyl acetate copolymers, ethylene vinyl acetate (EVA) copolymers, polyvinyl alcohols, polyvinyl alcohol copolymers, celluloses (e.g., ethylcelluloses, methylcelluloses, hydroxymethylcelluloses, hydroxypropylcelluloses, and carboxymethylcelluloses), polyvinylpyrolidones, vinyl chloride, vinylidene chloride copolymers, calcium lignosulfonates, acrylic copolymers, polyvinylacrylates, polyethylene oxide, acylamide polymers and copolymers, polyhydroxyethyl acrylate, methylacrylamide monomers, and polychloroprene.

In some examples, one or more of the adhesion agents, anti-fungal agents, growth regulation agents, and pesticides (e.g., insecticide) are non-naturally occurring compounds (e.g., in any combination). Additional examples of agriculturally acceptable carriers include dispersants (e.g., polyvinylpyrrolidone/vinyl acetate PVPIVA S-630), surfactants, binders, and filler agents.

The compositions can also contain a surfactant. Non-limiting examples of surfactants include nitrogen-surfactant blends such as Prefer 28 (Cenex), Surf-N(US), Inhance (Brandt), P-28 (Wilfarm) and Patrol (Helena); esterified seed oils include Sun-It II (AmCy), MSO (UAP), Scoil (Agsco), Hasten (Wilfarm) and Mes-100 (Drexel); and organo-silicone surfactants include Silwet L77 (UAP), Silikin (Terra), Dyne-Amic (Helena), Kinetic (Helena), Sylgard 309 (Wilbur-Ellis) and Century (Precision). The surfactant may be present at a concentration of between 0.01% v/v to 10% v/v. The surfactant may be present at a concentration of between 0.1% v/v to 1% v/v.

In certain cases, the formulation includes a microbial stabilizer. Such an agent can include a desiccant, which can include any compound or mixture of compounds that can be classified as a desiccant regardless of whether the compound or compounds are used in such concentrations that they in fact have a desiccating effect on a liquid inoculant. Such desiccants are ideally compatible with the bacterial population used, and should promote the ability of the microbial population to survive application on the seeds and to survive desiccation. Examples of suitable desiccants include one or more of trehalose, sucrose, glycerol, and methylene glycol. Other suitable desiccants include, but are not limited to, non- reducing sugars and sugar alcohols (e.g., mannitol or sorbitol). The amount of desiccant introduced into the formulation can range from about 5% to about 50% by weight/volume, for example, between about 10% to about 40%, between about 15% to about 35%, or between about 20% to about 30%. In some cases, it is advantageous for the formulation to contain agents such as a fungicide, an antibacterial agent, an herbicide, a nematicide, an insecticide, a plant growth regulator, a rodenticide, bactericide, or a nutrient. In some examples, agents may include protectants that provide protection against seed surface-borne pathogens. In some examples, protectants may provide some level of control of soil-borne pathogens. In some examples, protectants may be effective predominantly on a seed surface.

In some examples, a fungicide may include a compound or agent, whether chemical or biological, that can inhibit the growth of a fungus or kill a fungus. In some examples, a fungicide may include compounds that may be fungistatic or fungicidal. In some examples, fungicide can be a protectant, or agents that are effective predominantly on the seed surface, providing protection against seed surface-borne pathogens and providing some level of control of soil-borne pathogens. Non-limiting examples of protectant fungicides include captan, maneb, thiram, or fludioxonil.

In some examples, fungicide can be a systemic fungicide, which can be absorbed into the emerging seedling and inhibit or kill the fungus inside host plant tissues. Systemic fungicides used for seed treatment include, but are not limited to the following: azoxystrobin, carboxin, mefenoxam, metalaxyl, thiabendazole, trifloxystrobin, and various triazole fungicides, including difenoconazole, ipconazole, tebuconazole, and triticonazole. Mefenoxam and metalaxyl are primarily used to target the water mold fungi Pythium and Phytophthora. Some fungicides are preferred over others, depending on the plant species, either because of subtle differences in sensitivity of the pathogenic fungal species, or because of the differences in the fungicide distribution or sensitivity of the plants. In some examples, fungicide can be a biological control agent, such as a bacterium or fungus. Such organisms may be parasitic to the pathogenic fungi, or secrete toxins or other substances which can kill or otherwise prevent the growth of fungi. Any type of fungicide, particularly ones that are commonly used on plants, can be used as a control agent in a seed composition.

In some examples, the upstream composition comprises a control agent which has antibacterial properties. The control agent with antibacterial properties may be selected from the compounds described herein elsewhere. The compound may be Streptomycin, oxytetracycline, oxolinic acid, or gentamicin. Other examples of antibacterial compounds which can be used as part of a seed coating composition include those based on dichlorophene and benzylalcohol hemi formal (ProxelR from ICI or ActicideR RS from Thor Chemie and KathonR MK 25 from Rohm & Haas) and isothiazolinone derivatives such as alkylisothiazolinones and benzisothiazolinones (ActicideR MBS from Thor Chemie).

In some examples, growth regulator is selected from the group consisting of: Abscisic acid, amidochlor, ancymidol, 6-benzylaminopurine, brassinolide, butralin, chlormequat (chlormequat chloride), choline chloride, cyclanilide, daminozide, dikegulac, dimethipin, 2,6-dimethylpuridine, ethephon, flumetralin, flurprimidol, fluthiacet, forchlorfenuron, gibberellic acid, inabenfide, indole-3-acetic acid, maleic hydrazide, mefluidide, mepiquat (mepiquat chloride), naphthaleneacetic acid, N-6-benzyladenine, paclobutrazol, prohexadione phosphorotrithioate, 2,3,5-tri-iodobenzoic acid, trinexapac-ethyl and uniconazole. Additional non-limiting examples of growth regulators include brassinosteroids, cytokinines (e.g., kinetin and zeatin), auxins (e.g., indolylacetic acid and indolylacetyl aspartate), flavonoids and isoflavanoids (e.g., formononetin and diosmetin), phytoaixins (e.g., glyceolline), and phytoalexin-inducing oligosaccharides (e.g., pectin, chitin, chitosan, polygalacuronic acid, and oligogalacturonic acid), and gibellerins. Such agents are ideally compatible with the agricultural seed or seedling onto which the formulation is applied (e.g., it should not be deleterious to the growth or health of the plant). Furthermore, the agent is ideally one which does not cause safety concerns for human, animal or industrial use (e.g., no safety issues, or the compound is sufficiently labile that the commodity plant product derived from the plant contains negligible amounts of the compound).

Some examples of nematode-antagonistic biocontrol agents include ARF18; 30 Arthrobotrys spp.; Chaetomium spp.; Cylindrocarpon spp.; Exophilia spp.; Fusarium spp.; Gliocladium spp.; Hirsutella spp.; Lecanicillium spp.; Monacrosporium spp.; Myrothecium spp.; Neocosmospora spp.; Paecilomyces spp.; Pochonia spp.; Stagonospora spp.; vesiculararbuscular mycorrhizal fungi, Burkholderia spp.; Pasteuria spp., Brevibacillus spp.; Pseudomonas spp.; and Rhizobacteria. Particularly preferred nematode-antagonistic biocontrol agents include ARF18, Arthrobotrys oligospora, Arthrobotrys dactyloides, Chaetomium globosum, Cylindrocarpon heteronema, Exophilia jeanselmei, Exophilia pisciphila, Fusarium aspergilus, Fusarium solani, Gliocladium catenulatum, Gliocladium roseum, Gliocladium vixens, Hirsutella rhossiliensis, Hirsutella minnesotensis, Lecanicillium lecanii, Monacrosporium drechsleri, Monacrosporium gephyropagum, Myrotehcium verrucaria, Neocosmospora vasinfecta, Paecilomyces lilacinus, Pochonia chlamydosporia, Stagonospora heteroderae, Stagonospora phaseoli, vesiculararbuscular mycorrhizal fungi, Burkholderia cepacia, Pasteuria penetrans, Pasteuria thornei, Pasteuria nishizawae, Pasteuria ramosa, Pastrueia usage, Brevibacillus laterosporus strain G4, Pseudomonas fluorescens and Rhizobacteria.

Some examples of nutrients can be selected from the group consisting of a nitrogen fertilizer including, but not limited to Urea, Ammonium nitrate, Ammonium sulfate, Non-pressure nitrogen solutions, Aqua ammonia, Anhydrous ammonia, Ammonium thiosulfate, Sulfur-coated urea, Urea-formaldehydes, IBDU, Polymer-coated urea, Calcium nitrate, Ureaform, and Methylene urea, phosphorous fertilizers such as Diammonium phosphate, Monoammonium phosphate, Ammonium polyphosphate, Concentrated superphosphate and Triple superphosphate, and potassium fertilizers such as Potassium chloride, Potassium sulfate, Potassium-magnesium sulfate, Potassium nitrate. Such compositions can exist as free salts or ions within the seed coat composition. Alternatively, nutrients/fertilizers can be complexed or chelated to provide sustained release over time.

Some examples of rodenticides may include selected from the group of substances consisting of 2-isovalerylindan- 1,3 - dione, 4-(quinoxalin-2-ylamino) benzenesulfonamide, alphachlorohydrin, aluminum phosphide, antu, arsenous oxide, barium carbonate, bisthiosemi, brodifacoum, bromadiolone, bromethalin, calcium cyanide, chloralose, chlorophacinone, cholecalciferol, coumachlor, coumafuryl, coumatetralyl, crimidine, difenacoum, difethialone, diphacinone, ergocalciferol, flocoumafen, fluoroacetamide, flupropadine, flupropadine hydrochloride, hydrogen cyanide, iodomethane, lindane, magnesium phosphide, methyl bromide, norbormide, phosacetim, phosphine, phosphorus, pindone, potassium arsenite, pyrinuron, scilliroside, sodium arsenite, sodium cyanide, sodium fluoroacetate, strychnine, thallium sulfate, warfarin and zinc phosphide.

In the liquid form, for example, solutions or suspensions, bacterial populations can be mixed or suspended in water or in aqueous solutions. Suitable liquid diluents or carriers include water, aqueous solutions, petroleum distillates, or other liquid carriers.

Solid compositions can be prepared by dispersing the bacterial populations in and on an appropriately divided solid carrier, such as peat, wheat, bran, vermiculite, clay, talc, bentonite, diatomaceous earth, fuller's earth, pasteurized soil, and the like. When such formulations are used as wettable powders, biologically compatible dispersing agents such as non-ionic, anionic, amphoteric, or cationic dispersing and emulsifying agents can be used.

The solid carriers used upon formulation include, for example, mineral carriers such as kaolin clay, pyrophyllite, bentonite, montmorillonite, diatomaceous earth, acid white soil, vermiculite, and pearlite, and inorganic salts such as ammonium sulfate, ammonium phosphate, ammonium nitrate, urea, ammonium chloride, and calcium carbonate. Also, organic fine powders such as wheat flour, wheat bran, and rice bran may be used. The liquid carriers include vegetable oils such as soybean oil and cottonseed oil, glycerol, ethylene glycol, polyethylene glycol, propylene glycol, polypropylene glycol, etc.

### Non-Genetically Modified Maize

The systems and methods described herein are suitable for any of a variety of nongenetically modified maize plant seeds. And in some aspects, the corn is organic. Furthermore, the methods and bacteria described herein are suitable for any of the following nongenetically modified hybrids, varieties, lineages, etc.. Corn varieties may generally fall under six categories: sweet corn, flint corn, popcorn, dent corn, pod corn, and flour corn.

### Sweet Corn

Yellow su varieties include Earlivee, Early Sunglow, Sundance, Early Golden Bantam, Iochief, Merit, Jubilee, and Golden Cross Bantam. White su varieties include True Platinum, Country Gentleman, Silver Queen, and Stowell's Evergreen. Bicolor su varieties include Sugar & Gold, Quickie, Double Standard, Butter & Sugar, Sugar Dots, Honey & Cream. Multicolor su varieties include Hookers, Triple Play, Painted Hill, Black Mexican/Aztec.

Yellow se varieties include Buttergold, Precocious, Spring Treat, Sugar Buns, Colorow, Kandy King, Bodacious R/M, Tuxedo, Incredible, Merlin, Miracle, and Kandy Korn EH. White se varieties include Spring Snow, Sugar Pearl, Whiteout, Cloud Nine, Alpine, Silver King, and Argent. Bicolor se varieties include Sugar Baby, Fleet, Bon Jour, Trinity, Bi-Licious, Temptation, Luscious, Ambrosia, Accord, Brocade, Lancelot, Precious Gem, Peaches and Cream Mid EH, and Delectable R/M. Multicolor se varieties include Ruby Queen.

Yellow sh2 varieties include Extra Early Super Sweet, Takeoff, Early Xtra Sweet, Raveline, Summer Sweet Yellow, Krispy King, Garrison, Illini Gold, Challenger, Passion, Excel, Jubilee SuperSweet, Illini Xtra Sweet, and Crisp 'N Sweet. White sh2 varieties include Summer Sweet White, Tahoe, Aspen, Treasure, How Sweet It Is, and Camelot. Bicolor sh2 varieties include Summer Sweet Bicolor, Radiance, Honey 'N Pearl, Aloha, Dazzle, Hudson, and Phenomenal.

Yellow sy varieties include Applause, Inferno, Honeytreat, and Honey Select. White sy varieties include Silver Duchess, Cinderella, Mattapoisett, Avalon, and Captivate. Bicolor sy varieties include Pay Dirt, Revelation, Renaissance, Charisma, Synergy, Montauk, Kristine, Serendipity/Providence, and Cameo.

Yellow augmented supersweet varieties include Xtra-Tender 1ddA, Xtra-Tender 11dd, Mirai 131Y, Mirai 130Y, Vision, and Mirai 002. White augmented supersweet varieties include Xtra-Tender 3dda, Xtra-Tender 31dd, Mirai 421W, XTH 3673, and Devotion. Bicolor augmented supersweet varieties include Xtra-Tender 2dda, Xtra-Tender 21dd, Kickoff XR, Mirai 308BC, Anthem XR, Mirai 336BC, Fantastic XR, Triumph, Mirai 301BC, Stellar, American Dream, Mirai 350BC, and Obsession.

### Flint Corn

Flint corn varieties include Bronze-Orange, Candy Red Flint, Floriani Red Flint, Glass Gem, Indian Ornamental (Rainbow), Mandan Red Flour, Painted Mountain, Petmecky, Cherokee White Flour,

### Pop Corn

Pop corn varieties include Monarch Butterfly, Yellow Butterfly, Midnight Blue, Ruby Red, Mixed Baby Rice, Queen Mauve, Mushroom Flake, Japanese Hull-less, Strawberry, Blue Shaman, Miniature Colored, Miniature Pink, Pennsylvania Dutch Butter Flavor, and Red Strawberry.

### Dent Corn

Dent corn varieties include Bloody Butcher, Blue Clarage, Ohio Blue Clarage, Cherokee White Eagle, Hickory Cane, Hickory King, Jellicorse Twin, Kentucky Rainbow, Daymon Morgan's Knt. Butcher, Leaming, Leaming's Yellow, McCormack's Blue Giant, Neal Paymaster, Pungo Creek Butcher, Reid's Yellow Dent, Rotten Clarage, and Tennessee Red Cob.

Corn varieties may include P1618W, P1306W, P1345, P1151, P1197, P0574, P0589, and P0157. W = white corn.

The methods and bacteria described herein may be suitable for any hybrid of the maize varieties set forth herein.

### Genetically Modified Maize

The systems and methods described herein are suitable for any of a hybrid, variety, lineage, etc. of genetically modified maize plant seeds.

### EXAMPLES

The following examples are included to further describe certain features of the methods and systems described herein, but are not intended to limit the scope of the disclosure or claims below in any manner.

### Example 1

Nitrogen is the most important nutrient for wheat growth and development. In spring wheat production, nitrogen is typically applied primarily as synthetic fertilizer available in various formulations. Approximately, one to two pounds of actual nitrogen applied per acre is used to produce one bushel of spring wheat grain per acre, however these values will vary depending on individual farming practices, soil types, soil organic matter content, and changing environmental conditions which can result in loss of plant-available nitrogen fertilizer through leaching, denitrification, or volatilization. To maximize nitrogen-use efficiency, spring wheat nitrogen fertilizer applications are split between preplant and late vegetative application.

The PBXST nitrogen-fixing microbe includes a nitrogen fixing microbe *Kosakonia sacchari* 6-5687 and a liquid extender 3-1340. The purpose of the liquid extender is to protect and stabilize microbes during the seed treatment and planting processes. Spring wheat seed is commonly treated with a base seed treatment containing a fungicide seed treatment and an insecticide seed treatment. Seed treatments are applied to spring wheat seed usually the same day or just a few days prior to planting the seed. PBXST can be co-applied with fungicide and insecticide seed treatments or applied as an overtreatment to previously treated seed.

This experiment was undertaken to evaluate the on-farm performance of PBXST in spring wheat when applied as a seed treatment using the seed treatment methods and systems described herein. An on-farm research trial was conducted at a research site located near Des Lacs, North Dakota. The on-farm trial consisted of two seed treatments and two nitrogen applications, as shown in Table 1. The two nitrogen applications were established in zones across the on-farm field trial. Seed treatments were established in blocks across the established nitrogen application zones. A Durum wheat variety was selected for this protocol; nitrogen management for Durum wheat and Hard Red Spring wheat are similar.

All seed treatments were applied using the methods and systems described herein. The base fungicide and insecticide seed treatment was applied at rate of 5.0 fl. oz./100 lbs. of seed, whereas PBXST was applied at a rate of 7.5 fl. oz./100 lbs. of seed. The total application rate to seed was 12.5 fl. oz./100 lbs. of seed. All seed treatments were applied to seed at a rate of 350 pounds of seed per minute.

**Table 1: Applied Seed and Fertilizer Treatments**

| **Seed Treatments** | | |
|---|---|---|
| 1 | Non-Treated Control (NTC) | Spring planted Durum variety treated with a commercial fungicide and insecticide base seed treatment but not treated with PBXST. |
| 2 | PBXST | Spring planted Durum variety treated with a co-application of PBXST plus a commercial fungicide and insecticide base seed treatment. |

| **Nitrogen Applications** | | |
|---|---|---|
| 1 | Full Rate | Split preplant followed by an in-season nitrogen application |
| 2 | Reduced Rate | Split preplant followed by an in-season reduced nitrogen application (40 lbs. per acre) |

Whole plant tissue samples were collected at the boot to heading growth stage (late vegetative growth stage) to assess percent nitrogen concentration, the results of which are shown in Table 2. Percent nitrogen concentration of plants sampled from the PBXST treated zones was higher than in the non-treated control. Wheat grain yield for seed treated with PBXST was two bushels/acre higher than the non-treated control.

**Table 2: Measured Nitrogen Concentration and Yield**

| Treatment Number | Treatment | Treatment Description | Plant tissue nitrogen concentration at Boot to Head growth stage (%N) | Wheat grain yield (bushels/acre) |
|---|---|---|---|---|
| 1 | Non-Treated Control (NTC) | Wheat seed treated with a base seed treatment, not treated with PBXST | 3.53 | 44.1 |
| 2 | PBXST | Wheat seed treated with a base seed treatment plus PBXST | 3.76 | 46.1 |

### Example 2

Another sequence of experiments were conducted to determine if the process of overtreating corn seed with a ProvenXST seed treatment using a laboratory seed treater provides repeatable and consistent results in comparison to corn seed overtreated with ProvenXST using commercially available seed treaters.

Seed treatments are applied directly to commercial corn seed with the purpose of delivering multiple plant protection and plant nutritional technologies conveniently and efficiently. Seed treatments are composed primarily of fungicides, insecticides, nematicides, biologicals (bacterium or fungi), polymers and colors. Maximum performance of all seed-treatment components is dependent upon accurate application onto seed; this can be especially important for microbial seed treatments which include living microorganisms that need to remain viable on the seed throughout the treatment and planting processes. ProvenXST seed treatment includes two nitrogen-fixing bacteria microbes and a liquid extender that protects and stabilizes the microbes during the treatment and planting processes.

Nearly 100% of commercial hybrid seed corn planted by growers in the United States is treated with a base-seed treatment by commercial seed corn companies. Hybrid corn seed treated by a commercial seed company prior to the delivery to the field (i.e., to a sales representative or grower) is referred to as an "upstream" seed treatment. Once the upstream-treated seed is delivered to the field, the seed can be "overtreated" with an additional treatment. This overtreatment of seed is referred to as occurring "downstream" in the treatment process. One benefit of applying seed treatments as a downstream overtreatment downstream is the ability to address specific crop production needs on a localized basis.

Seed can be treated using a laboratory seed treater, or using a commercially available seed treater, with the desired outcome in each case of even distribution of the treatment onto the seed. The process for treatment of seed using the laboratory seed treater and commercially available seed treaters is similar, first applying and evenly distributing the treatment onto the seed, followed by a thorough mixing of the treated seed. Laboratory seed treaters can apply a small volume of seed treatment to a small volume of seed, whereas commercially available seed treaters typically apply large volumes of seed treatment to correspondingly large volumes of seed.

A commonly used laboratory seed treater is the Hege 11 liquid seed treater (available from Wintersteiger AG, Austria), which is used in the experiments described below. Commonly used commercial seed treaters include the KSi 02PRO SC treater (available from KSi, Sabetha, KS) and the USC AT500H treater (available from USC, Sabetha, KS).

ProvenXST seed treatment is comprised of two nitrogen-fixing microbes *Klebsiella variicola* 137-2253 and *Kosakonia sacchari* 6-5687, and a liquid extender 3-1274. The total application rate for all three components was 5.4 fl. oz./100 lbs of commercial corn seed, as shown in Table 3. To accurately compare the Hege laboratory treater to commercial treaters, identical seed sources were utilized for each lab and commercial treater combination. The commercial corn seed hybrid P1138AML (Seed 1) was utilized for comparison of the Hege laboratory treater to the Ksi 02PRO commercial treater (Treater 1). The commercial corn seed hybrid DK55-54RIB (Seed 2) was utilized for comparison of the Hege laboratory treater to the USC AT500H commercial treater (Treater 2).

**Table 3: Seed Treatment Application and Components**

| **Seed Treatment Equipment** | **Hybrid Corn Seed** | **Research Locations** | **ProvenXST Overtreatment Application Rate** | **Seed Treatment Batch Size** |
|---|---|---|---|---|
| "Hege" = Hege 11 | "Seed 1" = P1138AML and "Seed 2" = DKC55-54RIB | Pivot Bio Research Laboratory, Hayward, CA | 5.4 fl. oz./100 lbs. of seed | 3.3 lbs./50 sec |
| Lab liquid seed treater - Atomizer and 14.5L mixing bowl. | | | | |
| "Treater 1" = Ksi 02PRO | "Seed 1" = P1138AML | Ksi Conveyors, Sabetha, KS | 5.4 fl. oz./100 lbs. of seed | 350 lbs. treated per minute; 750 lbs. of seed treated |
| Commercial Seed-Treatment | | | | |
| Applicator - Atomizer and mixing conveyor | | | | |
| "Treater 2" = USC AT500H | "Seed 2" = DKC55-54RIB | USC Seed Treatment Solutions, Sabetha, KS | 5.4 fl. oz./100 lbs. of seed | 350 lbs. treated per minute; 750 lbs. of seed treated |
| Commercial Seed Treatment | | | | |
| Applicator - Atomizer and mixing auger | | | | |

In Table 3 above, P1138AML seed was obtained from Corteva Agriscience (Wilmington, DE), DKC555-54RIB seed was obtained from Bayer CropScience (Monheim am Rhein, Germany), and ProvenXST is an experimental seed treatment from Pivot Bio (Berkeley, CA).

Key characteristics when evaluating commercial seed treatments include on-seed microbe viability over time, impact on seed germination, seed flowability and plantability at a level to accommodate handling of seed during the planting process, and a measurement of dust on seed (dust-off) that is at or below industry standards. These characteristics are summarized in Table 4.

**Table 4: Key Evaluation Methods and Characteristics for Seed Treatments**

| **Application Parameters** | **Methods** |
|---|---|
| On-seed microbial viability | Samples of treated seed were collected at the time of treating the seed and shipped to a laboratory for analysis. Treated seed samples were stored at room temperature; microbes were extracted from the treated seed and plated to calculate colony forming units per seed (cfu/seed) over time. |
| Seed Germination | Percent corn seed germination using commercial warm-germination and cold-germination methods. |
| Seed Flowability | Seed flow measured using an AgInnovations seed flow meter, reported as grams of seed flow per 0.4 seconds. Passing results were targeted to be 10% of controls. |
| Seed Plantability | Percent singulation of seed flowing through a commercial Precision Planter seed-metering unit with eSet JD Corn disc. Passing results were 98% or higher. |
| Seed Treatment "Dust-Off" | Measurement of "dust" from treated seed was performed using a commercial Heubach dustmeter, reported as grams of dust per 100,000 seed. Commercial standard is < 0.75 grams of dust per 100,000 seed. |

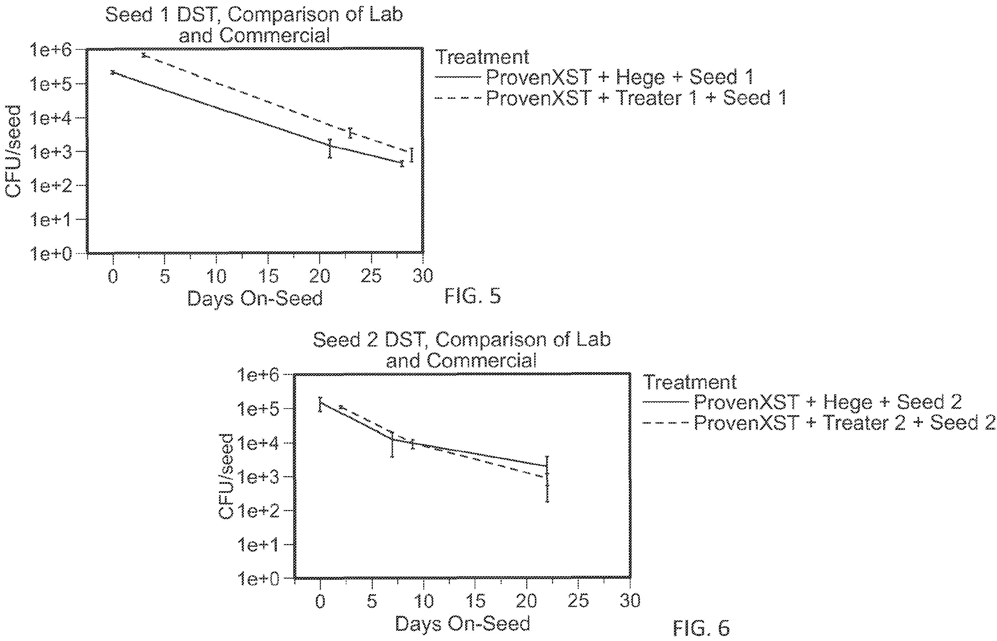

As shown in FIG. 5, over a 30-day period, the ProvenXST microbe on-seed viability was similar for P1138AML seed (Seed 1) overtreated with ProvenXST using either the Hege laboratory treater or the Ksi 02PRO commercial treater (Treater 1). Further, as shown in FIG. 6, over a 23-day period, the ProvenXST microbe on-seed viability was similar for DKC55-RIB (Seed 2) seed overtreated with ProvenXST using either the Hege laboratory treater or the USC AT500H commercial treater (Treater 2).

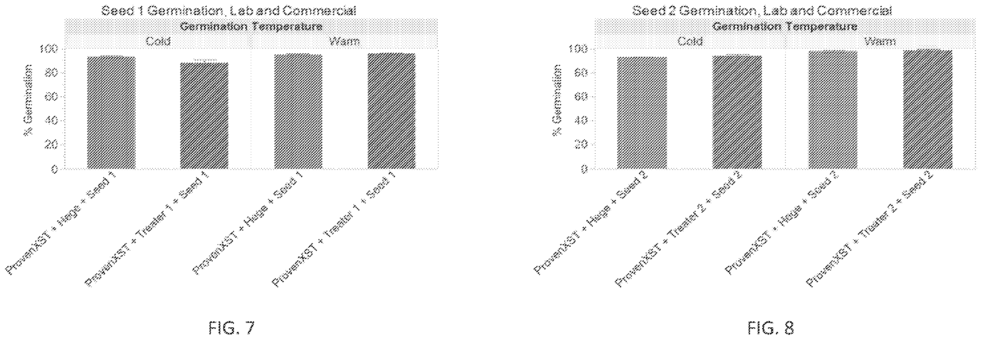

No differences were observed in percent warm or cold germination of P1 138AML seed (Seed 1) when overtreated with ProvenXST seed treatment using the Hege laboratory treater or the Ksi 02PRO commercial treater (Treater 1), as shown in FIG. 7. There were no differences observed in percent warm or cold germination of DKC55-54RIB seed (Seed 2) when overtreated with ProvenXST seed treatment using the Hege laboratory treater or the USC AT500H commercial treater (Treater 2), as shown in FIG. 8.

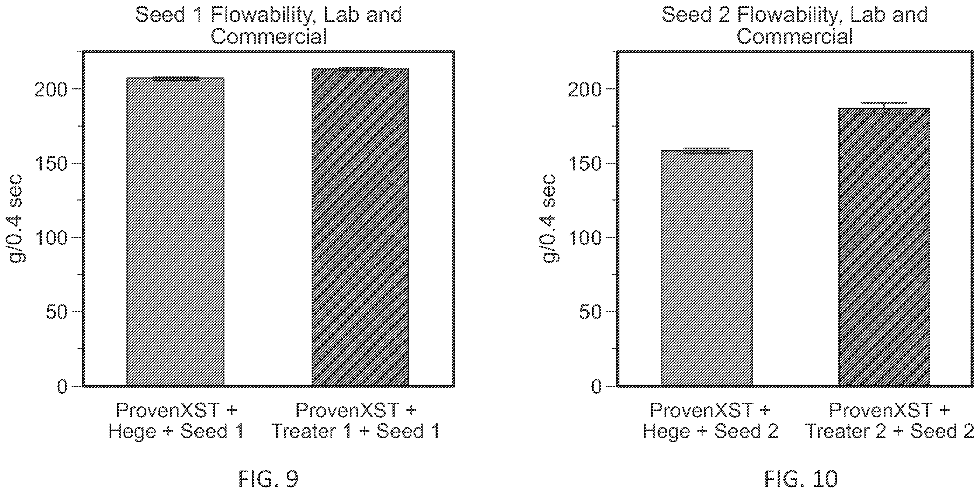

There were no differences observed in seed flowability of P1138AML seed (Seed 1) when overtreated with ProvenXST seed treatment using the Hege laboratory treater or the Ksi 02PRO commercial treater (Treater 1), as evidenced by FIG. 9. Further, there were no differences in seed flowability of DKC-55RIB seed (Seed 2) when overtreated with ProvenXST seed treatment using the Hege laboratory treater or the USC AT500H commercial treater (Treater 2), as shown in FIG. 10.

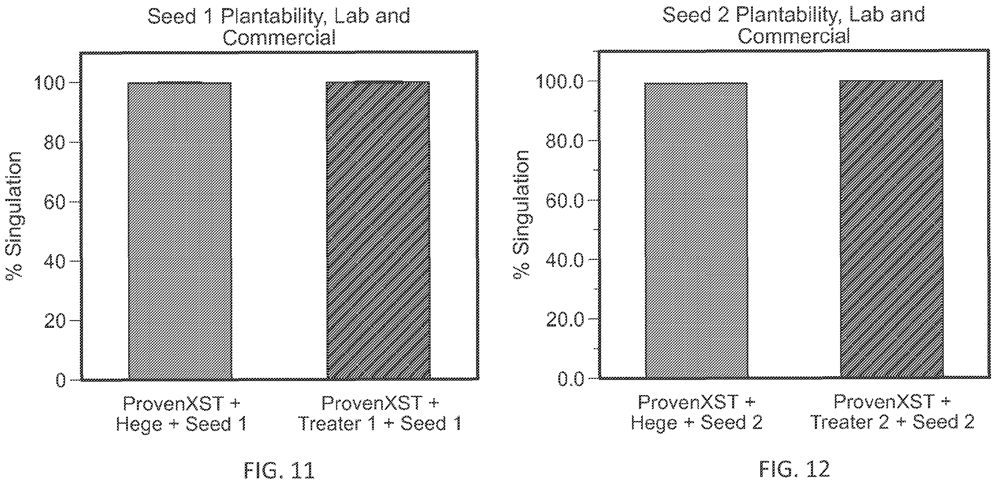

There were no differences in seed plantability of P1138AML seed (Seed 1) observed when overtreated with ProvenXST seed treatment using the Hege laboratory treater or the Ksi 02PRO commercial treater (Treater 1), as shown in FIG. 11, and no differences in seed plantability of DKC-55RIB seed (Seed 2) when overtreated with ProvenXST seed treatment using the Hege laboratory treater or the USC AT500H commercial treater (Treater 2), as indicated in FIG. 12.

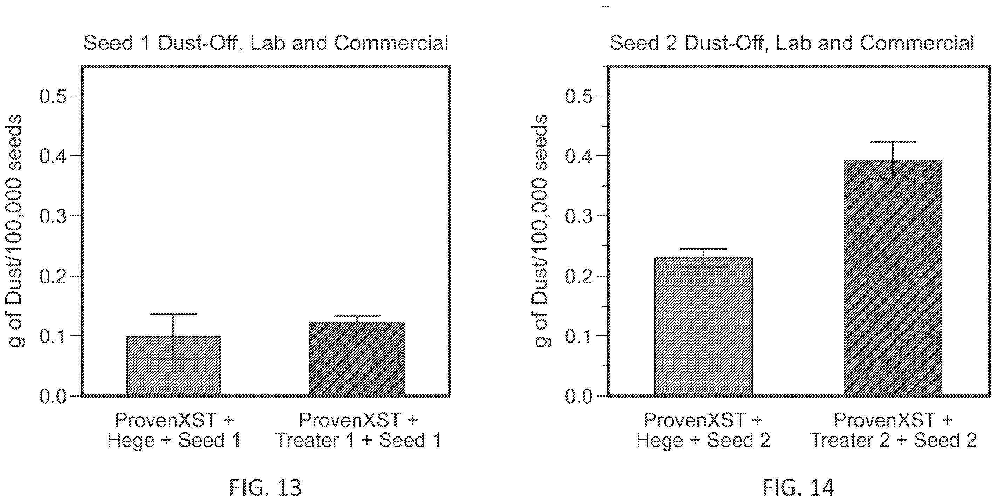

No differences were observed in seed-treatment dust-off of ProvenXST seed treatment from P1138AML seed (Seed 1) when overtreated with ProvenXST seed treatment using the Hege laboratory treater or the Ksi 02PRO commercial treater (Treater 1), based on the results shown in FIG. 13. In addition, there were no differences in seed-treatment dust-off of ProvenXST seed treatment from DKC55-RIB seed (Seed 2) when overtreated with ProvenXST seed treatment using the Hege laboratory treater or the USC AT500H commercial treater (Treater 2), as indicated in FIG. 14.

### Example 3

Research trials have shown that ProvenXST can produce up to 40 pounds of plant-available nitrogen per acre. Nitrogen provided to corn plants through the microbial activity of ProvenXST is not susceptible to many of the environmental stresses that result in the loss of synthetic nitrogen and subsequent negative impact on crop production and the environment. Additional experiments were undertaken to evaluate the on-farm performance of ProvenXST when applied as an overtreatment to commercial corn hybrids using commercial seed treaters.

An on-farm research protocol was conducted at multiple locations across the United States corn belt to evaluate the performance of ProvenXST seed treatment in corn production fields. The on-farm trial consisted of two seed treatments and two nitrogen fertilizer applications, as summarized in Table 5. The two nitrogen fertilizer applications were established in zones across the on-farm field trial. Seed treatments were established across the on-farm trial using a split-planter arrangement, where non-treated seed was planted using the left half of the planter, and ProvenXST treated seed was planted using the right half of the planter. P rovenXST seed treatment was applied at a rate of 5.4 fl. oz./100 lbs of commercial corn seed.

**Table 5: Seed Treatments and Nitrogen Fertilizer Applications**

| **Seed Treatments** | | |
|---|---|---|
| 1 | Non-Treated Control (NTC) | Commercial seed corn hybrids not overtreated with ProvenXST |
| 2 | ProvenXST | Commercial seed corn hybrids overtreated with ProvenXST seed treatment |

| **Nitrogen Applications** | | |
|---|---|---|
| 1 | Full Rate | Grower standard 100% nitrogen application rate |
| 2 | Reduced Rate | Grower standard 100% nitrogen rate reduced by 40 lbs./acre of nitrogen |

Key measurements for evaluating ProvenXST seed treatment application and on-farm performance included: on-seed microbial viability, corn stand establishment and pounds of nitrogen produced per acre by ProvenXST microbes. These parameters are summarized in Table 6.

**Table 6: Key Measurements for Evaluating ProvenXST Performance**

| **Application Parameters** | **Methods** |
|---|---|
| On-seed ProvenXST viability | Samples of treated seed were collected at the time of treating and shipped to a laboratory for analysis. Microbes were extracted from the treated seed and plated to calculate colony forming units per seed (cfu/seed) over time. |
| Corn stand establishment | At the V2 stage of corn plant growth (seedling growth stage), corn stand establishment (plant count per acre) was determined by making multiple assessments of corn plant populations within a corn field. |
| Pounds of plant nitrogen produce per acre | At the VT stage of plant growth (late vegetative growth stage), whole plant tissue samples were collected within individual seed treatment areas. Data was reported as pounds of nitrogen per acre (percent whole-plant nitrogen x sample dry weight x corn stand count per acre). |

On-seed viability of ProvenXST (CFU/seed) was reported for ProvenXST treated seeds planted at 29 on-farm research locations, shown in Table 7. ProvenXST was applied as an overtreatment to fifty-five commercial corn hybrids using a KSI 02PRO or a USC AT500H commercial seed treater. Treated seeds were sampled at the time of treating seed or at the time of planting.

**Table 7: On-Seed Viability Trials of ProvenXST**

| **Trial Number** | **Trial Identification Name** | **On-Seed Titer Colony Forming Units (CFU)** | **Sample Collection** | **Commercial Seed Treater** |
|---|---|---|---|---|
| 1 | IA05-5PLAHN | 5.50E+04 | At Planting | USC AT500H |
| 2 | IA04-5PLAHN | 2.60E+04 | At Planting | USC AT500H |
| 3 | IN02-5TIMME | 1.40E+04 | At Planting | KSI 02PRO |
| 4 | IA07-5GAUL_ | 4.00E+04 | At Planting | USC AT500H |
| 5 | mo02-5SPATA | 7.80E+04 | At Treating | USC AT500H |
| 6 | mn01-5STADH | 5.40E+04 | At Planting | USC AT500H |
| 7 | IN01-5GASPE | 5.80E+03 | At Planting | KSI 02PRO |
| 8 | MO01-5JOHNS | No Data Avl. | NA | USC AT500H |
| 9 | IA01-5HORRA | 2.90E+03 | At Planting | USC AT500H |
| 10 | IL06-5DENTO | 9.30E+03 | At Planting | KSI 02PRO |
| 11 | ne01-5RROHDE | 1.20E+04 | At Planting | USC AT500H |
| 12 | IL03-5DORSE | 2.70E+03 | At Planting | KSI 02PRO |
| 13 | IL04-5COWSE | 1.50E+05 | At Planting | KSI 02PRO |
| 14 | IL08-5SHAFE | 2.40E+03 | At Planting | USC AT500H |
| 15 | SD01-5WIESE | 2.30E+04 | At Planting | USC AT500H |
| 16 | OH01-5BOND_ | 2.30E+04 | At Planting | KSI 02PRO |
| 17 | KS01-5COMPT | 1.60E+03 | At Planting | KSI 02PRO |
| 18 | MS01-5BLESS | 2.30E+04 | At Planting | KSI 02PRO |
| 19 | MO03-5DOBSO | 4.70E+04 | At Planting | KSI 02PRO |
| 20 | KS04-5RENYE | 6.10E+03 | At Planting | USC AT500H |
| 21 | MO05-5MCCRE | 2.90E+04 | At Planting | KSI 02PRO |
| 22 | IA06-5PLAHN | 1.30E+04 | At Planting | USC AT500H |
| 23 | NE02-5ROHDE | 1.20E+04 | At Planting | USC AT500H |
| 24 | IA02-5HEIMS | 1.00E+04 | At Planting | USC AT500H |
| 25 | IA03-5STORB | 1.50E+04 | At Planting | USC AT500H |
| 26 | IL02-SHARDW | 5.10E+03 | At Planting | KSI 02PRO |
| 27 | IL01-5STRIB | 6.20E+03 | At Planting | KSI 02PRO |
| 28 | IL07-5EDWAR | 3.70E+02 | At Planting | USC AT500H |
| 29 | WI01-5SCHWE | 5.40E+03 | At Planting | USC AT500H |

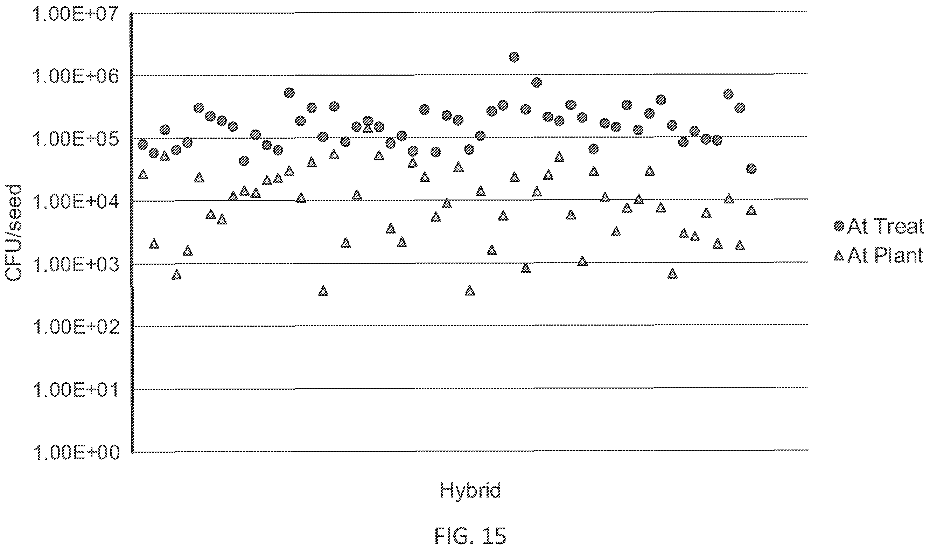

The application of ProvenXST using commercial seed treaters resulted in viable microbial counts for seed from fifty-five hybrids sampled at the time of treating or at the time of planting. FIG. 15 shows on-seed microbial viability (CFU/seed) of ProvenXST microbial seed treatment overtreated onto multiple commercial corn hybrids (n = 55) using either a Ksi 02PRO or USC AT500H commercial seed treater. Overtreated seed samples were collected at the time of treating the seed, at the time of planting the seed or both.

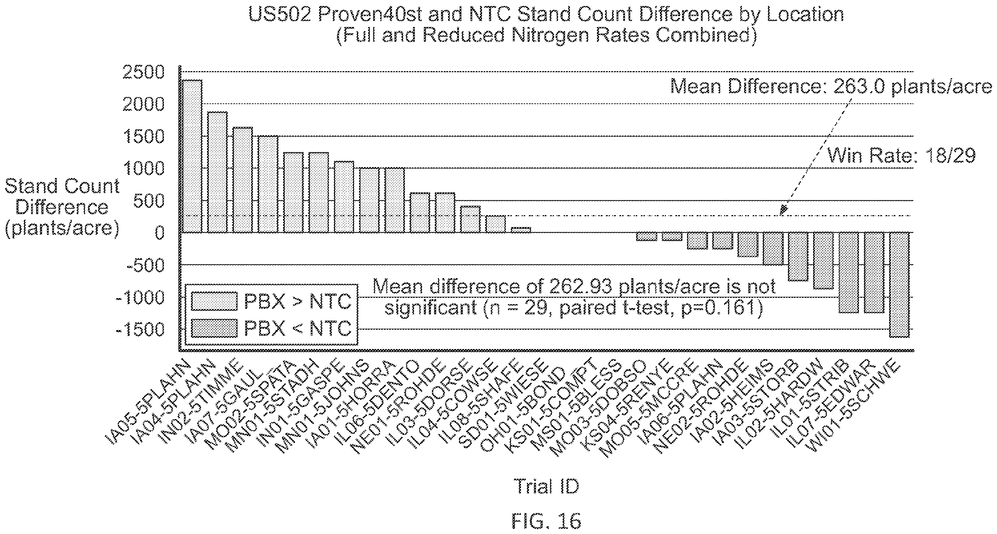

Across 29 on-farm research locations there was only a small numerical difference of 263 plants/acre in early-season stand counts for non-treated seed compared to ProvenXST treated seed. FIG. 16 shows a comparison of ProvenXST treated seed (PBX) to non-treated seed (NTC) at both full and reduced nitrogen fertilizer applications. Early season corn-stand counts were taken at the V2 growth stage (seedling) across twenty-nine on-farm research locations. Overtreating commercial corn seed with ProvenXST did not appear to impact early-season corn plant stands.

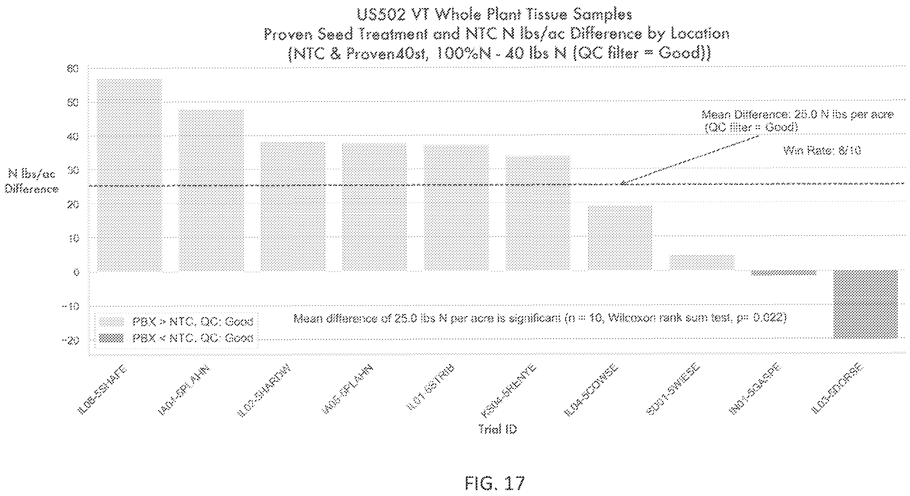

At ten research locations, whole-plant samples were collected from the reduced nitrogen application zone (100%-40 lbs. N). FIG. 17 shows pounds of nitrogen produced per acre from ProvenXST treated seed compared to non-treated seed when synthetic nitrogen fertilizer is reduced by 40 lbs./acre. Pounds of nitrogen produced per acre was determined by whole-plant samples collected at the VT stage of growth (late vegetative growth stage). In 8 of 10 locations, there was an increase in pounds of nitrogen from the plants sampled within the ProvenXST treatment. Whole plants from ProvenXST treated seed contained and average of 25 lbs./acre more nitrogen compared to plants collected from the non-treated control.

In addition to the embodiments expressly disclosed herein, it will be understood that various modifications to the embodiments described may be made without departing from the spirit and scope of the disclosure. Accordingly, other embodiments are within the scope of the following claims.

## Claims

1. A seed treatment system (100), comprising:
an inlet (102) for receiving seeds (190);
a treatment dispersal assembly (104) for applying a treatment to seeds;
a member (202) configured to expose the seeds to the treatment;
an outlet (106) for discharging seeds;
a first transport mechanism (108) configured to deliver seeds from the inlet (102) to the treatment dispersal assembly (104); and
a second transport mechanism (110) configured to deliver treated seeds from the treatment dispersal assembly (104) to the outlet (106),
wherein during operation, the system (100) is configured to:
receive seeds comprising a first coating; and
apply an overtreatment to the received seeds that comprises at least one microbial;
**characterized in that** the member (202) comprises a recess (206, 208) into which seeds are delivered by the first transport mechanism (108).

2. The system of claim 1, wherein the system (100) is configured to apply the overtreatment to the received seeds by dispersing the seeds spatially so that the seeds do not aggregate following application of the overtreatment.

3. The system of claim 1, wherein the first coating comprises a biocide.

4. The system of any one of the preceding claims, wherein the at least one microbial comprises at least one nitrogen fixing microbe.

5. The system of any one of the preceding claims, wherein the overtreatment further comprises a polymer; optionally wherein the system (100) is configured to apply the polymer and the microbial simultaneously to the seeds.

6. The system of any one of the preceding claims, wherein the member (202) is cone-shaped and positioned in a housing of the system (100) such that an apex of the member faces the inlet (102).

7. The system of any one of the preceding claims, wherein relative to a ground surface that supports the system (100), the first transport mechanism (108) is positioned below the inlet (102) and above the treatment dispersal assembly (104) so that seeds are transported by falling through the first transport mechanism (108).

8. The system of any one of the preceding claims, wherein the first transport mechanism (108) comprises a seed flow gate to adjust a transportation rate of the seeds through the first transport mechanism (108).

9. The system of any one of the preceding claims, wherein the treatment dispersal assembly (104) comprises an atomizer (114) configured to generate droplets of a treatment fluid.

10. The system of claim 9, wherein the atomizer (114) is in fluid communication with a reservoir (122a-c) configured to contain the treatment fluid.

11. The system of any one of the preceding claims, further comprising a scattering mechanism (302) configured to disperse received seeds onto the member (202).

12. The system of any one of the preceding claims, wherein the overtreatment comprises a protecting agent that preserves viability of the at least one microbial.

13. The system of any one of the preceding claims, wherein the overtreatment comprises more than one microbial; optionally wherein the system (100) comprises separate reservoirs (122a-c) for each microbial.

14. The system of any one of the preceding claims, wherein the at least one microbial comprises:
(a) a genetically engineered nitrogen fixing microbe; and/or
(b) a mutagenized nitrogen fixing microbe.

15. A method of treating seeds, comprising:
transporting seeds comprising a first coating from an inlet (102) of a seed treatment system (100) into a recess (206, 208) of a conical member (202) of a treatment dispersal assembly (104);
dispersing the received seeds spatially using the member to expose the seeds to an overtreatment;
applying the overtreatment to the dispersed seeds to produce treated seeds; and
transporting the treated seeds to an outlet (106) of the seed treatment system using a conveyor mechanism, optionally wherein the conveyor mechanism is a belt conveyor mechanism or an auger conveyor mechanism,
wherein the overtreatment comprises at least one microbial.

## Patentansprüche

1. Saatgutbehandlungssystem (100), Folgendes umfassend:
einen Einlass (102) zum Aufnehmen von Saatgut (190);
eine Behandlungsverteilungsanordnung (104) zum Aufbringen einer Behandlung auf Saatgut;
ein Element (202), das dazu konfiguriert ist, das Saatgut der Behandlung auszusetzen;
einen Auslass (106) zum Abführen von Saatgut;
einen ersten Transportmechanismus (108), der dazu konfiguriert ist, Saatgut von dem Einlass (102) zu der Behandlungsverteilungsanordnung (104) zu führen; und
einen zweiten Transportmechanismus (110), der dazu konfiguriert ist, behandeltes Saatgut von der Behandlungsverteilungsanordnung (104) zu dem Auslass (106) zu führen,
wobei das System (100) dazu konfiguriert ist, während des Betriebes Folgendes zu tun:
Empfangen von Saatgut, das einen ersten Überzug umfasst; und
Aufbringen einer Überbehandlung auf das empfangene Saatgut, die mindestens ein mikrobielles Mittel umfasst;
**dadurch gekennzeichnet, dass** das Element (202) eine Vertiefung (206, 208) umfasst, in die das Saatgut durch den ersten Transportmechanismus (108) geführt wird.

2. System nach Anspruch 1, wobei das System (100) dazu konfiguriert ist, die Überbehandlung auf das empfangene Saatgut durch räumliches Verteilen des Saatguts aufzubringen, sodass sich das Saatgut nach der Aufbringung der Überbehandlung nicht zusammenballt.

3. System nach Anspruch 1, wobei die erste Beschichtung ein Biozid umfasst.

4. System nach einem der vorhergehenden Ansprüche, wobei das mindestens eine mikrobielle Mittel mindestens eine Stickstoff fixierende Mikrobe ist.

5. System nach einem der vorhergehenden Ansprüche, wobei die Überbehandlung ferner ein Polymer umfasst; wobei optional das System (100) dazu konfiguriert ist, das Polymer und das mikrobielle Mittel gleichzeitig auf das Saatgut aufzubringen.

6. System nach einem der vorhergehenden Ansprüche, wobei das Element (202) kegelförmig und in einem Gehäuse des Systems (100) angeordnet ist, sodass ein Scheitel des Elements zum Einlass (102) weist.

7. System nach einem der vorhergehenden Ansprüche, wobei der erste Transportmechanismus (108) relativ zu einer Bodenoberfläche, die das System (100) trägt, unter dem Einlass (102) und über der Behandlungsverteilungsanordnung (104) positioniert ist, sodass das Saatgut durch Fallen durch den ersten Transportmechanismus (108) transportiert wird.

8. System nach einem der vorhergehenden Ansprüche, wobei der erste Transportmechanismus (108) einen Saatgutflussschieber umfasst, um eine Transportrate des Saatguts durch den ersten Transportmechanismus (108) zu justieren.

9. System nach einem der vorhergehenden Ansprüche, wobei die Behandlungsverteilungsanordnung (104) einen Zerstäuber (114) umfasst, der dazu konfiguriert ist, Tröpfchen eines Behandlungsfluids zu erzeugen.

10. System nach Anspruch 9, wobei der Zerstäuber (114) in Fluidverbindung mit einem Reservoir (122a-c) steht, das dazu konfiguriert ist, das Behandlungsfluid zu enthalten.

11. System nach einem der vorhergehenden Ansprüche, ferner einen Streumechanismus (302) umfassend, der dazu konfiguriert ist, empfangenes Saatgut auf dem Element (202) zu verteilen.

12. System nach einem der vorhergehenden Ansprüche, wobei die Überbehandlung ein Schutzmittel umfasst, das die Lebensfähigkeit des mindestens einen mikrobiellen Mittels bewahrt.

13. System nach einem der vorhergehenden Ansprüche, wobei die Überbehandlung mehr als ein mikrobielles Mittel umfasst, wobei optionaldas System (100) separate Reservoire (122a-c) für jedes mikrobielle Mittel umfasst.

14. System nach einem der vorhergehenden Ansprüche, wobei das mindestens eine mikrobielle Mittel Folgendes umfasst:
(a) eine genetisch veränderte Stickstoff fixierende Mikrobe; und/oder
(b) eine mutagenisierte Stickstoff fixierende Mikrobe.

15. Verfahren zum Behandeln von Saatgut, Folgendes umfassend:
Transportieren von Saatgut, das eine erste Beschichtung umfasst, von einem Einlass (102) eines Saatgutbehandlungssystems (100) in eine Vertiefung (206, 208) eines kegelförmigen Elements (202) einer Behandlungsverteilungsanordnung (104);
räumliches Verteilen des empfangenen Saatguts unter Verwendung des Elements, um das Saatgut einer Überbehandlung auszusetzen;
Aufbringen der Überbehandlung auf das verteilte Saatgut, um behandeltes Saatgut zu produzieren; und
Transportieren des behandelten Saatguts zu einem Auslass (106) des Saatgutbehandlungssystems unter Verwendung eines Fördermechanismus, wobei der Fördermechanismus optional ein Bandfördermechanismus oder ein Förderschneckenmechanismus ist,
wobei die Überbehandlung mindestens ein mikrobielles Mittel umfasst.

## Revendications

1. Système de traitement de semences (100), comprenant :
une entrée (102) pour la réception de semences (190) ;
un ensemble de traitement par dispersion (104) pour l'application d'un traitement à des semences ;
un élément (202) configuré pour exposer les semences au traitement ;
une sortie (106) pour l'évacuation des semences ;
un premier mécanisme de transport (108) configuré pour acheminer des semences de l'entrée (102) jusqu'à l'ensemble de traitement par dispersion (104) ; et
un deuxième mécanisme de transport (110) configuré pour acheminer des semences traitées de l'ensemble de traitement par dispersion (104) jusqu'à la sortie (106),
dans lequel, lors du fonctionnement, le système (100) est configuré pour :
recevoir des semences comprenant un premier enrobage ; et
appliquer un surtraitement aux semences reçues qui comprend au moins un agent microbien ;
**caractérisé en ce que** l'élément (202) comprend un évidement (206, 208) dans lequel des semences sont acheminées par le premier mécanisme de transport (108).

2. Système selon la revendication 1, dans lequel le système (100) est configuré pour appliquer le surtraitement aux semences reçues par dispersion spatiale des semences de sorte que les semences ne s'agrègent pas suite à l'application du surtraitement.

3. Système selon la revendication 1, dans lequel le premier enrobage comprend un biocide.

4. Système selon l'une quelconque des revendications précédentes, dans lequel l'au moins un agent microbien comprend au moins un micro-organisme fixant l'azote.

5. Système selon l'une quelconque des revendications précédentes, dans lequel le surtraitement comprend en outre un polymère ; éventuellement dans lequel le système (100) est configuré pour appliquer le polymère et l'agent microbien aux semences de manière simultanée.

6. Système selon l'une quelconque des revendications précédentes, dans lequel l'élément (202) est en forme de cône et positionné dans un logement du système (100) de sorte qu'un sommet de l'élément est en regard de l'entrée (102) .

7. Système selon l'une quelconque des revendications précédentes, dans lequel, par rapport à une surface au sol qui supporte le système (100), le premier mécanisme de transport (108) est positionné au-dessous de l'entrée (102) et au-dessus de l'ensemble de traitement par dispersion (104) de sorte que les semences sont transportées en tombant à travers le premier mécanisme de transport (108).

8. Système selon l'une quelconque des revendications précédentes, dans lequel le premier mécanisme de transport (108) comprend une vanne d'écoulement de semences pour ajuster une vitesse de transport des semences à travers le premier mécanisme de transport (108).

9. Système selon l'une quelconque des revendications précédentes, dans lequel l'ensemble de traitement par dispersion (104) comprend un atomiseur (114) configuré pour générer des gouttelettes d'un fluide de traitement.

10. Système selon la revendication 9, dans lequel l'atomiseur (114) est en communication fluidique avec un réservoir (122a-c) configuré pour renfermer le fluide de traitement.

11. Système selon l'une quelconque des revendications précédentes, comprenant en outre un mécanisme de diffusion (302) configuré pour disperser des semences reçues sur l'élément (202).

12. Système selon l'une quelconque des revendications précédentes, dans lequel le surtraitement comprend un agent de protection qui préserve la viabilité de l'au moins un agent microbien.

13. Système selon l'une quelconque des revendications précédentes, dans lequel le surtraitement comprend plus d'un agent microbien ; éventuellement dans lequel le système (100) comprend des réservoirs séparés (122a-c) pour chaque agent microbien.

14. Système selon l'une quelconque des revendications précédentes, dans lequel l'au moins un agent microbien comprend :
(a) un micro-organisme fixant l'azote génétiquement modifié ; et/ou
(b) un micro-organisme fixant l'azote mutagénisé.

15. Procédé de traitement de semences, comprenant :
le transport de semences comprenant un premier enrobage depuis une entrée (102) d'un système de traitement de semences (100) jusqu'à un évidement (206, 208) d'un élément conique (202) d'un ensemble de traitement par dispersion (104) ;
la dispersion spatiale des semences reçues à l'aide de l'élément pour exposer les semences à un surtraitement ;
l'application du surtraitement aux semences dispersées afin de produire des semences traitées ; et
le transport des semences traitées vers une sortie (106) du système de traitement de semences à l'aide d'un mécanisme de transporteur, éventuellement dans lequel le mécanisme de transporteur est un mécanisme de transporteur à courroie ou un mécanisme de transporteur à vis,
dans lequel le surtraitement comprend au moins un agent microbien.
